(19) Europäisches Patentamt
European Patent Office
Office européen des brevets

(11) EP 1 320 063 A2

(12) EUROPÄISCHE PATENTANMELDUNG

(43) Veröffentlichungstag:
**18.06.2003 Patentblatt 2003/25**

(51) Int Cl.[7]: **G06K 9/00**, G06T 7/00, G08G 1/04

(21) Anmeldenummer: **02090397.7**

(22) Anmeldetag: **09.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(30) Priorität: **11.12.2001 DE 10160719**

(71) Anmelder: **Deutsches Zentrum für Luft- und Raumfahrt e.V.**
**51147 Köln (DE)**

(72) Erfinder:
- **Woesler, Richard**
  **12489 Berlin (DE)**
- **Berres, Axel**
  **13125 Berlin (DE)**

(74) Vertreter: **Effert, Bressel und Kollegen**
**Radickestrasse 48**
**12489 Berlin (DE)**

# (54) Verfahren und Vorrichtung zur Erkennung und Wiedererkennung von Objekten

(57) Die Erfindung betrifft ein Verfahren und eine Vorrichtung zur Durchführung des Verfahrens zur Erkennung und Wiedererkennung von Objekten, insbesondere von Kraftfahrzeugen, wobei die Vorrichtung mindestens eine Kamera und eine Bildverarbeitungseinheit umfasst, wobei mittels Kamera periodisch ein fester Bildbereich aufnehmbar ist, in dem Bildbereich mindestens eine Region of Interest definiert ist, die ein Vielfaches kleiner als der Bildbereich ist, in der Bildverarbeitungseinheit modifizierte Bilder der real aufgenommenen Bilder durch arithmetische Verknüpfungen und/ oder Filterfunktionen erzeugbar sind, aus den modifizierten Bildern Fahrzeughypothesenbereiche bestimmbar sind, aus denen Fahrzeuge detektierbar sind, die detektierten Fahrzeuge anhand von Fahrzeugprototypen klassifizierbar sind und weitere Objekt-Attribut ermittelbar sind, wobei die Daten eines klassifizierten Objektes und des Objekt-Attributes an eine Zentrale und/ oder benachbarte Kamera übertragbar sind, wo eine Wiedererkennung des Verkehrsobjekts erfolgt.

1
2
2
3
2
3
2
2
2
2
2
2

Fig. 2

EP 1 320 063 A2

**Beschreibung**

Die Erfindung betrifft ein Verfahren und eine Vorrichtung zur Erkennung und Wiedererkennung von Objekten, insbesondere von Kraftfahrzeugen.

Derartige Verfahren sind insbesondere zur Erfassung bzw. Abschätzung des Verkehrsflusses wichtig, wobei die daraus gewonnenen Daten für verschiedene Zwecke, wie beispielsweise intelligente Ampelsteuerungen oder schnelle Verkehrsmeldungen, verwendbar sind.

Zur Objekterkennung und -verfolgung sind bereits verschiedene Verfahren bekannt, die auf verschiedenen Lösungsansätzen beruhen. Die bekanntesten Verfahren beruhen dabei auf 3D-basierten Modellen, region-basierter Objektverfolgung oder auf einer Konturermittlung des Objektes.

Ein Verfahren zur Objekterkennung und -verfolgung ist beispielsweise aus dem Fachartikel "D. Koller, K. Daniilidis, and H. H. Nagel, Model based object tracking in monocular image sequences of road traffic scences" bekannt. Hierbei verfügt das System über eine Datenbank in der 3D-Drahtgittermodelle der gängigsten Fahrzeugtypen in einem Speicher abgelegt sind. Anschaulich wird das 3D-Drahtgittermodell durch einen Satz Vektoren beschrieben, welche die einzelnen Abmessungen beinhalten. Bei der Objekterkennung und -verfolgung werden die erkennbaren Linien eines Objektes in Vektoren umgesetzt und mit den Inhalten der Datenbank verglichen. Dabei wird angenommen, dass das Objekt vom Fahrzeugtyp ist, mit dessen 3D-Drahtgittermodell die größte Übereinstimmung existiert. Anschließend wird dann das Objekt unter zu Hilfenahme des 3D-Drahtgittermodells in den fortlaufenden Bildern einer Kamera verfolgt. Das Verfahren benötigt hohen Rechenaufwand und ist daher auf gängigen Systemen bei weitem nicht echtzeitfähig. Es funktioniert, solange das Objekt im Sichtbereich einer Kamera bleibt. Soll das von einer Kamera detektierte Objekt jedoch von einer zweiten Kamera wiedergefunden werden, die keinen Überlappungsbereich zur ersten Kamera aufweist, sind die vorhandenen Informationen des 3D-Drahtgittermodells unzureichend, insbesondere da die Abmessung der einzelnen Kraftfahrzeugtypen teilweise nur geringfügig variieren.

Ähnliche Probleme stellen sich bei region- oder konturbasierenden Verfahren ein, wo ein Bildausschnitt oder eine Kontur erfasst wird und diese in den darauffolgenden Bildern gesucht werden. All diese Verfahren funktionieren mehr oder weniger gut, solange diese im Bereich einer Kamera bleiben. Jedoch bietet keines dieser Verfahren eine Lösung, wie ein von einer ersten Kamera gefundenes Objekt unter einem beliebigen anderen Blickwinkel durch eine zweite Kamera wiederentdeckt werden kann. Dies ist jedoch notwendig, um detailliertere Aussagen über den Verkehr treffen zu können.

Eine theoretische Möglichkeit besteht darin, an jeder Kreuzung einen Satz von Kameras anzuordnen, der von einem Kraftfahrzeug ein eindeutiges Merkmal, wie beispielsweise das Nummernschild, erfasst. Der dabei notwendige Investitionsaufwand wäre enorm, so dass bereits aus Kostengründen ein solches System in näherer Zukunft nicht zu realisieren ist. Ein weiteres Problem stellt der Datenschutz dar.

Aus der DE 198 31 413 A1 ist ein Bildverarbeitungsverfahren bekannt, bei dem eine oder mehrere Merkmalsbild-Muster mit einem Originalbild korreliert werden, wobei durch Merkmalsextraktion aus einer Originalbild-Szene eine Merkmalsbild-Szene gebildet wird, deren Merkmalswerte durch eine Transformation oder einen Filter örtlich aufgeweicht und die transformierte Bild-Szene mit den Merkmalsbild-Mustern korreliert werden und/oder dass die Merkmalswerte der Merkmalsbild-Muster durch eine Transformation oder einen Filter aufgeweicht werden und die transformierten Merkmalsbild-Muster mit der Merkmalsbild-Szene korreliert werden und dass mit den verarbeiteten Bilddaten Objekte detektiert werden. Ein bevorzugtes Anwendungsgebiet des Verfahrens ist der Einsatz in einem Kraftfahrzeug zur Erkennung von Verkehrsobjekten, wie beispielsweise Straßenschilder. Eine Objekterkennung von sich bewegenden Kraftfahrzeugen ist ebenfalls möglich. Allerdings ist das Verfahren alleine nicht für eine Objektwiedererkennung außerhalb des Sichtbereiches der Kamera geeignet. Des weiteren ist das beschriebene Verfahren äußerst aufwendig bezüglich der Rechenzeit, weil die Anzahl der benötigten verschiedenen 3d-Prototypen von Fahrzeugen groß ist, wenn eine Wiedererkennung eines Fahrzeugs an einer anderen Kreuzung möglich sein soll.

Der Erfindung liegt daher das technische Problem zugrunde, ein Verfahren und eine Vorrichtung zur Objekterkennung von sich bewegenden Kraftfahrzeugen zu schaffen, mittels derer eine schnelle Erkennung und -wiedererkennung der Objekte im Sichtbereich im allgemeinen nicht überlappender Kameras ermöglicht wird.

Die Lösung des technischen Problems ergibt sich durch die Gegenstände mit den Merkmalen der Patentansprüche 1 und 26. Weitere vorteilhafte Ausgestaltungen der Erfindung ergeben sich aus den Unteransprüchen.

Hierzu werden dezentral Kamerarechnersysteme fest aufgebaut, wobei diese jeweils mindestens eine Kamera und eine Bildverarbeitungs- und Auswerteeinheit aufweisen. Die Kameras weisen im allgemeinen keine überlappenden Bildbereiche auf. In einem Vorabschritt werden Regions of Interest (ROIs) definiert, in denen Objekte vermutet werden. Die Größe der Regions of Interest im Verhältnis zum Bildbereich ist dabei abhängig von dem Ort der Anbringung der Kamera. Bei Überwachung einer gesamten Kreuzung durch eine Kamera sind die ROIs dabei typischerweise ein Vielfaches kleiner als der Bildbereich der Kamera, wohingegen bei einer Anbringung an Brücken und Überwachung des darunter liegenden Bereichs die Regions of Interest einen erheblichen Anteil des Bildbereiches ausmachen können. Ist an einem Ort der Einsatz mehrerer Kameras notwendig oder zweckmäßig, so können deren Bildbereiche überlappen, wohingegen die zugehörigen Regions of Interest sich vorzugsweise nicht überlappen. Eine Überlappung von Regions of Interest mehrerer Kameras ist jedoch denkbar, um beispielsweise nicht gut erkennbare Verkehrsobjekte durch Daten mehrerer Kameras mit höherer Sicherheit zu erkennen. Hierbei ist jedoch die Zwangsbedingung der begrenzten Rechenzeit und/oder des Rechenspeichers zu berücksichtigen, sowie ein gegebenenfalls höherer Aufwand der entsprechend genauen Synchronisation der verschiedenen beteiligten Rechner.

Die Kamera nimmt periodisch in einem Zeittakt reale Bilder auf, die vorzugsweise farbig sind und weniger als etwa ein Pixel im Bildbereich zueinander verschoben sind. Diese realen Bilder werden durch arithmetische und Filterfunktionen modifiziert. Innerhalb der Regions of Interest werden Fahrzeughypothesen ermittelt und gegebenenfalls Fahrzeuge detektiert. Die detektierten Fahrzeuge werden klassifiziert. Um ein detektiertes und klassifiziertes Objekt wiederzuerkennen, reicht im Regelfall die Klassifikation nicht aus. Daher wird zusätzlich noch mindestens ein Attribut des Objektes ermittelt und zusammen mit der Klassifizierung an eine Zentrale und/oder mindestens eine benachbarte Kamera übermittelt, wobei der Vorgang der Objektwiedererkennung entweder in der Zentrale oder on-board bei der benachbarten Kamera erfolgt. Derartige Objekt-Attribute sind beispielsweise Farbdaten. Die Wiedererkennung erfolgt durch Vergleich der Daten eines detektierten und klassifizierten Fahrzeuges der einen Kamera mit den Werten einer anderen Kamera, wo mittels des gleichen Verfahrens ein Fahrzeug detektiert wurde. Durch dieses Verfahren wird eine schnelle Erkennung bzw. -Wiedererkennung von Objekten mit handelsüblichen Kameras und Bildverarbeitungs- und Auswerteeinheiten ermöglicht, die eine kostengünstige und schnelle Implementierung erlauben. Neben Fahrzeugen kann das Verfahren auch beispielsweise zur Erkennung und Wiedererkennung von Motorrädern, Fahrrädern oder Fußgängern Anwendung finden. Die Wiedererkennung ist dabei auch bei einer Drehung des Objekts möglich.

In einer Ausprägungsform besteht die Modifikation der realen Bilder in einer Differenzbildung, so dass Bewegungsbilder erzeugt werden. Aus zwei zeitlich zueinander versetzten Bildern wird ein Bewegungsbild generiert, so dass statische Objekte unterdrückt werden, wobei aktive bzw. sich bewegende Objekte in der Region of Interest ermittelt werden. Wird in der Region of Interest ein aktiver Bereich ermittelt, so wird im Bewegungsbild dessen Größe abgeschätzt und mit einem Schwellenwert verglichen. Zur Ermittlung einer Objekthypothese aus den Differenzbildern stehen verschiedene Ansätze zur Verfügung, die im einzelnen noch erläutert werden. Sollte die Objekthypothese zu klein oder zu groß sein, so sind Spezialfälle zu untersuchen, die später noch ausführlich beschrieben werden. Erscheint die Größe hingegen ausreichend, so wird die Geschwindigkeit des Objektes basierend auf robusten Differenzverfahren ermittelt. Unter Berücksichtigung der Objektgeschwindigkeit wird dann aus einem der Bewegungsbilder eine modifizierte Objektgröße ermittelt und das Objekt klassifiziert. Die ermittelte Objektgeschwindigkeit kann auch wieder zum Verwerfen der Hypothese führen, beispielsweise wenn die Quergeschwindigkeiten zu groß sind, so dass es sich nicht um ein Fahrzeug handeln kann. Die Verfahrensschritte "Ermittlung aktiver Bereich", "Größenbestimmung" und "Geschwindigkeitsbestimmung" stellen dabei das Aufstellen einer Fahrzeug und/oder Fahrzeugcluster-Hypothese dar, die durch verschiedene, später noch zu erläuternde, Ansätze verfeinert werden kann. Die anschließende Klassifikation kann unterschiedlich tief erfolgen. Beispielsweise kann sich die Klassifikation auf eine Unterteilung "Kleinwagen", "Mittelklassewagen", "Oberklasse", "Van", "Transporter", "LKW" sowie "PKW mit Anhänger" bzw. "LKW mit Anhänger" beschränken. Ebenso ist es jedoch möglich, dass von verschiedenen Herstellern Fahrzeugtypen-Merkmale abgespeichert werden.

In einer bevorzugten Ausführungsform werden zwei Bewegungsbilder erzeugt, wobei das erste eine feine Ortsskala und das andere eine gröbere Ortsskala aufweist. Dabei wird das Bewegungsbild mit der gröberen Ortsskala vorzugsweise aus dem Bewegungsbild mit der feinen Ortsskala erzeugt. Aus dem gröberen Bewegungsbild wird eine erste Abschätzung einer Fahrzeug- und/oder Fahrzeugcluster-Hypothese ermittelt.

Dies geschieht indem beispielsweise durch Clustern eine Größe des Objektes abgeschätzt wird. Mit Hilfe des feineren Bewegungsbildes wird eine Fahrzeugumrandungs-Hypothese ermittelt.

In einer alternativen Ausführungsform wird zur Bestimmung von Fahrzeughypothesenbereichen eine auf Fahrzeuge abgestimmte Scale-Space-Synchronisation verwendet. Hierzu wird ein Bewegungsbild erzeugt und aktive Bewegungskanten werden ermittelt, wobei ein Polygon unter Einschluss der Bewegungskanten die unterste Ebene der sog. rezeptiven Felder des Scale-Space bildet. Im einfachsten Fall ist das Polygon ein Rechteck. In dieser untersten Ebene des Scale-Space werden die lokalen Maxima bestimmt. Die nächsthöhere Ebene des Scale-Space stellt dann bereits die PKW-Ebene dar, wobei die rezeptiven Felder Fahrzeugvorder- und Fahrzeughinterkantenhypothesen zusammenfassen. Zusätzlich oder anstelle der Scale-Space-Synchronisation ist auch eine Kantendetektion, ein Farb- bzw. Helligkeits-Clusterverfahren (Color Structure Code (CSC)) und/oder eine Eckendetektion denkbar,
wobei Abmessungen von Fahrzeugteilen aus den einzelnen detektierten Ecken extrahiert werden können und eine Hierarchie nacheinander zu suchender Ecken festgelegt wird.

In einer bevorzugten Ausführungsform wird die Größe der Region of Interest in Abhängigkeit eines Zeittaktes T, einer maximal angenommenen Objektgeschwindigkeit $v_0$, die sich beispielsweise aus der vorgeschriebenen Geschwindigkeit berechnen lässt, und einer minimalen Objektlänge derart gewählt, dass vereinfacht ausgedrückt ein Objekt nicht innerhalb eines Zeitaktes die Region of Interest durchqueren kann. Hierdurch wird erreicht, dass die Region of Interest so klein wie möglich gehalten werden kann, was hinsichtlich einer Auswertung in Echtzeit erheblich Rechenzeit und -kapazität einsparen hilft.

In einer weiteren bevorzugten Ausführungsform ist eine Region of Interest als geschlossener Polygonzug mit mindestens vier Punkten ausgebildet.

Um Rechenzeit zu sparen, werden vorzugsweise ortsfeste verdeckende Objekte durch den Polygonzug ausgespart bzw. umfahren. Beispiele für derartige verdeckende Objekte sind Verkehrsschilder oder Bäume, wobei bei letzteren vorzugsweise ein Sicherheitsabstand berücksichtigt wird, da sich die Äste bei Wind bewegen.

In einer weiteren bevorzugten Ausführungsform werden die ROIs in den Ausfahrtsbereichen einer Kreuzung angeordnet, so dass damit insbesondere die Information gewonnen wird, bei welcher nächsten Kreuzung das Fahrzeug anschließend zu erwarten ist. Alternativ sind andere Verfahren für eine Vorausschau von Objektdaten für eine Wiedererkennung von Objekten an einem von einer weiteren Kamera überwachten Gebiet denkbar.

Optional können die Regions of Interest auch im Einfahrtsbereich der Kreuzung angeordnet werden, wobei dadurch die erfassten Kraftfahrzeuge im Kreuzungsbereich weiterverfolgt werden können, so dass die Information erhalten wird, über welche Straße das Kraftfahrzeug die Kreuzung wieder verlässt. Außerdem ist es denkbar, Regions of Interest vor und hinter einer Kreuzung zu verwenden, und damit eine Wiedererkennung von Fahrzeugen vor und hinter der Kreuzung durchzuführen.

In einer weiteren bevorzugten Ausführungsform wird mindestens ein Farbdatenwert des Objektes als Objekt-Attribut erfasst. Dabei werden vorzugsweise die Randbereiche von Flächen des Fahrzeuges unberücksichtigt gelassen, da dort aufgrund von Reflexionen häufig nicht dem Objekt entsprechende Farbwerte vorhanden sind. Vorzugsweise werden insbesondere bei PKW die Fahrdatenwerte im Wesentlichen aus normierten Farbdatenwerten der unteren Seitenflächen des Fahrzeuges ermittelt, weil im oberen Bereich die Scheiben den Farbwert verfälschen würden.

In einer weiteren bevorzugten Ausführungsform wird die Heckform, die Dachausbildung (Dachluke), vorhandenes Dachgepäck und/oder eine Objektfolge als Objekt-Attribut erfasst, wobei unter Objektfolge beispielsweise die Reihenfolge ein oder mehrerer vorangegangener bzw. nachfolgender Verkehrsobjekte als Attribut erfasst werden.

In einer weiteren bevorzugten Ausführungsform wird eine Schatten- und/oder Beleuchtungsanalyse durchgeführt.

In einer weiteren bevorzugten Ausführungsform nimmt die Auswerteeinheit eine Bestimmung der Witterungsverhältnisse vor, wobei die verwendeten Parameter bzw. Algorithmen an die Witterungsbedingungen angepasst werden.

In einer weiteren bevorzugten Ausführungsform wird die Größe der Regions of Interest in Abhängigkeit von der Helligkeit, beispielsweise bei Tag oder Nacht, gewählt.

In einer weiteren Ausführungsform wird auch eine Anbringung von Kameras an sich bei Sturm bewegenden Objekten wie Masten zugelassen. In dem Falle wird ein Wackeln der Kamera detektiert und das Wackeln für jedes Bild anhand eines gespeicherten Referenzbildes näherungsweise herausgerechnet.

Im Falle großen Wackelns kann alternativ ohne Herausrechnen des Wackelns eine alternative Fahrzeug-Erkennung vorzugsweise unter Verwendung eines Prototyp-Eckendetektionsverfahrens oder Farb- bzw. Helligkeits-Clusterverfahren (Color Structure Code (CSC) ) in den ROIs durchgeführt werden.

Kameras sind bevorzugt in Höhen von ca. 7m bis 50 m an Häusern angebracht. Bei wesentlich größeren Höhen ist ein Wackeln der Kamera insbesondere bei Sturm zu berücksichtigen. Dies gilt verstärkt für Masten. In diesem Fall wird ein Wackeln der Kamera detektiert und das Wackeln für jedes Bild anhand eines gespeicherten Referenzbildes näherungsweise herausgerechnet.

An vielen Kreuzungen und/oder Straßen sind hohe Masten vorhanden. Diese sind dann bevorzugt zum Anbringen der Kamera(s) zu verwenden, wenn ein Blickwinkel $\alpha$ der Kameras dadurch näher an der Vertikalen liegen kann als bei einer vergleichsweisen Anbringung an Häusern. Der Blickwinkel $\alpha$ ist im Folgenden der Winkel zwischen Kamerabildmittelstrahl und der Senkrechten, d.h. ein geringer Blickwinkel liegt um $\alpha \leq 30°$ und ein flacher Blickwinkel bedeutet $\alpha$ nahe 90°. Ein geringer Blickwinkel ist für die Ermittlung von Fahrzeug-Hypothesen von sehr hohem Wert, denn Verdeckungen von Verkehrsobjekten im Bildbereich sind dann äußerst selten. Zu Verdeckungen kommt es beispielsweise durch einen Fußgängerpulk auf dem Bürgersteig, welcher eine Querstraße verdeckt, und/oder durch hohe Fahrzeuge einer Fahrspur, welche Fahrzeuge der benachbarten Fahrspuren verdecken. Bei flachen Blickwinkeln müssen derartige Verdeckungen hingegen in der Regel herausgerechnet werden. Geringe Blickwinkel sind daher zu bevorzugen. Masten sind außerdem für eine Anbringung zu bevorzugen, wenn an Straßen Bäume die Sicht auf die Straße so einschränken, dass eine Verkehrsdatenextraktion durch Kameras, die an Häusern installiert sind, kaum möglich ist. Dies gilt insbesondere im Sommer, wenn die Bäume stark belaubt sind.

Vielfach ist es jedoch auch sinnvoll, eine Kamera an einem Gebäude einer Straße mit Blickrichtung auf diese anzubringen. Die Kamera ist dabei an dem Gebäude vorzugsweise derart angebracht, dass der Verlauf der Straße im Bild von unten nach oben auf eine Kreuzung zuführt. Dann kann diese Straße von der Kamera überwacht werden, ohne dass Fußgängerpulks auf den Bürgersteigen die Straße nennenswert verdecken könnten.

Durch Kameras mit flachem Blickwinkel ist auch die Verlängerung der Straße über die Kreuzung überwachbar, wobei insbesondere der Bereich, in dem Fußgänger die Straße überqueren, von Interesse ist. Querstraßen sind bei zu flachen Blickwinkeln der Kamera wg. des beschriebenen Fußgängerpulkproblems und dem Problem, dass große LKW dahinterliegende Fahrspuren verdecken, von der Kamera entweder nicht zu überwachen, bzw. nur mit entsprechend eingeschränkter Leistungsfähigkeit.

Um hohe Anforderungen einer mit den Daten durchführbaren Ampelsteuerung und die Echtzeitbedingungen zu erfüllen, ist es sinnvoll, verschiedene Levels of Service bereitzustellen. Hierfür werden Regions of Interests mit unterschiedlicher Größe und/oder unterschiedlicher Auflösung definiert. Die verschiedenen Levels benötigen verschiedene Rechenzeit. Niedrige Levels mit nur groben Aussagen über die Verkehrsdichte können zuerst bereitgestellt werden, so dass auch Systeme mit besonders wenig Rechenleistung kontinuierliches Erzeugen und Bereitstellen von Verkehrsdaten garantieren können.

Ein entscheidender Faktor für eine Verkehrssteuerung ist der Verkehr, der von einer Kreuzung auf eine andere zufährt. Aus diesem lässt sich eine dynamische Ampelsteuerung für die angefahrene Kreuzung generieren, welche gängige Ampelsteuerungssysteme und -verfahren übertrifft. Denn eine Ampel kann aufgrund des auf sie zukommenden Verkehrs sehr gut gesteuert werden, dagegen z.B. aufgrund von Schleifendaten direkt vor einer Kreuzung schlecht: Ein Fahrzeug, das kurz vor einer Kreuzung detektiert wird, hat bei roter Ampel bereits abgebremst. Wenn die Ampel für das Fahrzeug dann auf Grün geschaltet wird, ist die Reisezeitersparnis nicht so groß als wenn die Ampel früher auf Grün geschaltet worden wäre und das Fahrzeug nicht hätte bremsen müssen. Auch Schleifen, die weiter von einer Kreuzung entfernt sind, können oft nicht so wertvolle Daten liefern wie die Daten über den von einer Kreuzung weg- auf die andere zuführende es sind, denn eine Ampelsteuerung hat längere Grün/Rot-Phasen, die mit besserer Wirkung auf die Verringerung der Reisezeiten erstellt werden, wenn sie mehr zeitlichen Vorlauf vor der wirklichen Steuerung haben, weil die Planung der Steuerung dann besser sein kann. Dementsprechend wird unten der Detektion der Fahrzeuge hinter der Kreuzung als wichtigen (mittleren) Level of Service besondere Beachtung geschenkt.

Im Fall einer Ampelsteuerung aufgrund der Daten von benachbarten Kreuzungen ist der Rechenzeitbedarf der Bildverarbeitung demnach bedeutend geringer.

Die Erfindung wird nachfolgend anhand eines bevorzugten Ausführungsbeispiels näher erläutert. Die Fig. zeigen:

Fig. 1: ein schematisches Flussdiagramm des Verfahrens und
Fig. 2: eine schematische Darstellung einer Kreuzung mit Regions of Interest.

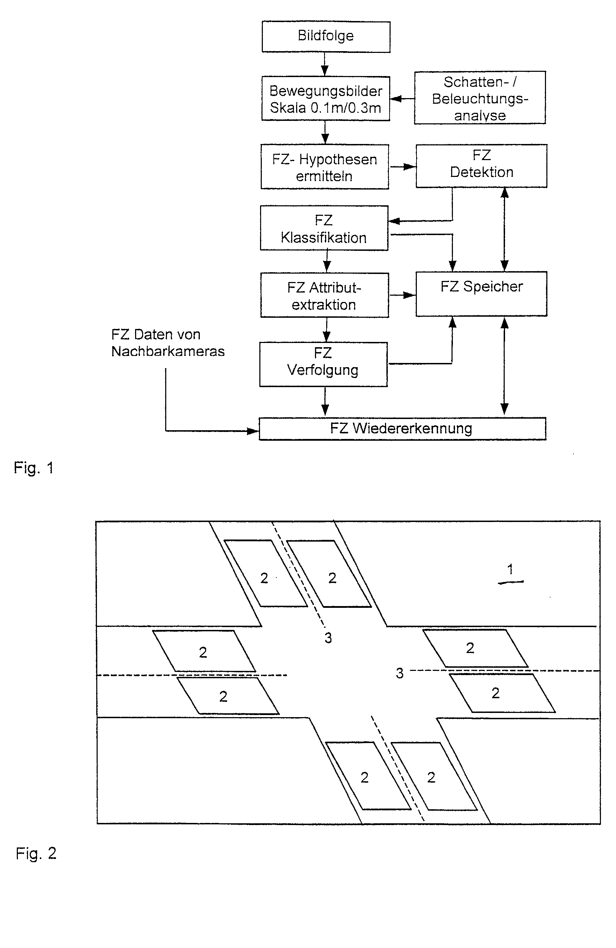

In der Fig. 1 ist ein schematisches Flussdiagramm des Verfahrens zur Objekterkennung von sich bewegenden Verkehrsobjekten dargestellt. In einem ersten Schritt werden Bilder von einem Bereich, in dem sich bewegende Verkehrsobjekte gefunden werden sollen, z.B. eine Fahrspur oder ein Fußgängerweg, aufgenommen. In einem nächsten Schritt wird aus mindestens zwei aufeinanderfolgenden Bildern eine Bewegungsbild ermittelt, wobei hierzu zunächst nur ein vorab definierter Bereich, die sogenannte Region of Interest, untersucht wird. Hierzu wird die Region of Interest in ein Gitter unterteilt und nach aktiven Bereichen im Bewegungsbild untersucht. In diesem Bewegungsbild kann bereits eine Schatten- und/oder Beleuchtungsanalyse durchgeführt werden. Dies ist jedoch nicht zwingend, sondern kann auch an anderer Stelle noch nachgeholt werden, was später noch erläutert wird. Anschließend erfolgt eine Bestimmung von Fahrzeughypothesen und die Fahrzeugdetektion. Die Art und Reihenfolge einzelner Verfahrensschritte ist dabei abhängig von der Wahl des Hypothesenansatzes. Im nächsten Schritt wird das Fahrzeug klassifiziert und es werden Fahrzeugattribute ermittelt und gespeichert. Das klassifizierte Fahrzeug kann nun gegebenenfalls verfolgt werden und/ oder durch eine andere Kamera wiedererkannt werden.

In der Fig. 2 ist schematisch eine Kreuzung dargestellt, die im Bildbereich 1 einer Kamera liegt. Die dargestellte Kreuzung umfasst vier ein- bzw. ausmündende Straßen, wobei jeweils vorzugsweise beginnend in einem Bereich ca. 1 m hinter der Kreuzung und etwaigen Fußgängerüberwegen in den ausmündenden Straßen jeweils eine Region of Interest 2 definiert wird. Im Falle, dass Fahrzeuge über die Kreuzung verfolgt werden sollen, werden vor der Kreuzung ebenfalls Regions of Interest 2 definiert. Die gestrichelten Linien in den Straßen stellen Fahrspurbegrenzungen 3 dar. Bevor die einzelnen Verfahrensschritte näher erläutert werden, werden zunächst einige Schritte im Vorfeld dargestellt:

**Aufstellen der Kamera**

Vorzugsweise wird eine Kamera in einer Höhe von 8 bis 50 m angebracht und bevorzugt mit Blickrichtung nach unten, d.h. möglichst nahe der Senkrechten, um das Problem der partiellen Verdeckung der Fahrzeuge untereinander zu minimieren.

Eine Orientierung wird vorzugsweise nach Norden gewählt, um zu vermeiden, dass die Sonne im Bild erscheint. Die Orientierung ist jedoch weniger wichtig als eine Anbringung an einem hohen Punkt. Am besten ist eine Kamera an einem Gebäude/Mast starr angebracht, so dass diese Schwankungen nur in dem Maße ausgesetzt ist, der einer Verschiebung des Bildes um weniger als eine Pixelbreite entspricht. Bei realen Aufnahmen von an Häusern befestigten Kameras zeigt sich, dass dies im allgemeinen selbst bei schlechtem Wetter erfüllt wird.

Falls ein Erscheinen der Sonne in einem Bild durch eine geeignete Kamerapositionierung nicht vermeidbar ist, so kann im vorhinein berechnet werden, wann sie im Bild bzw. nahe des Bildes stehen wird. In diesen Zeiten kann beispielsweise einem Nutzer und/oder einer abhängigen Anwendung automatisch mitgeteilt werden, dass keine Daten geliefert werden oder nur mit eingeschränkter Gewährleistung.
Die Anzahl der benötigten Kameras ist minimiert, wenn sie Kreuzungen überwachen und dabei am besten mit einer Kamera die gesamte Kreuzung überwacht werden kann. Denn die Anzahl der Straßenabschnitte zwischen Kreuzungen ist ca. doppelt so groß wie die Anzahl der Kreuzungen. Die Systemkosten hängen stark von der Anzahl der zur Überwachung eines Gebietes notwendigen Kameras ab.

**Definition der Region of Interest (ROI)**

Regions of Interest (ROIs) werden vorzugsweise in mehreren Größen definiert. Die größeren ROIs werden definiert als ein für alle überwachten Verkehrswege möglichst langer Bereich der Fahrspuren beginnend bei der Kreuzung im Bildbereich. Einzelne Fahrspuren werden in der Grafik gekennzeichnet und mit den entsprechenden Straßennamen und Fahrtrichtungsangaben belegt. Optional kann diese Prozedur auch von GIS-Werkzeugen erfüllt werden. Auch kann eine Positionsangabe über ein Positionsbestimmungssystem (z.B. GPS) und Daten von Systemen zur Bestimmung der Blickrichtung einer Kamera einbezogen werden.
Vorzugsweise werden die ROIs als geschlossene Polygone möglichst weniger, mindestens 4 Punkte eingezeichnet. Wenn Verdeckungsbereiche sich innerhalb der ROIs befinden, so sollten diese ebenfalls mit einem Polygonzug umfahren werden und als solche, nicht zum Bereich der ROIs gehörenden Teile kenntlich gemacht werden. Derartige Gebiete werden im folgenden als Fehlbereiche bezeichnet. Bei Bäumen ist ein Sicherheitsabstand von ca. 1 m einzubeziehen, weil Äste bei Wind schwingen. Referenzpunkte für die Größenerkennung der Fahrzeuge sind zusätzlich einmalig einzuzeichnen.
Zur Rechenzeitverringerung lässt sich der zu analysierende Bereich innerhalb eines ROI verkleinern. Eine Formel, die den Zeittakt und die Längsbreite der zu analysierenden ROI oder ROI-Teile in Beziehung setzt, wird im Folgenden hergeleitet. Hieraus lässt sich umgekehrt auch eine Formel für den nötigen Zeittakt bei unterschiedlich großen ROI herleiten. Speziell nachts ist für hohe Erkennungsraten ein größerer Bereich nötig, wenn man keinen Infrarotkanal zur Verfügung hat, weil das Bewegungsbild dann von Fahrzeugen teilweise nur die Scheinwerfer (oder Rücklichter) erkennen lässt. Dies wird später erläutert. Bevor die Formel hergeleitet werden kann, sind einige Definitionen vorzunehmen.
Die kleinen ROIs werden in zwei Raster mit definierten Absolutgrößen eingeteilt. Das feine Raster hat eine Gitterkonstante von etwa 0,1 m. Im Falle von Kameras mit hoher Auflösung lassen sich je vier, bzw. mehr benachbarte Pixel zusammenfassen. Es sollten jeweils so viele benachbarte Pixel zusammengefasst werden, dass die resultierende Auflösung bei nicht genauer als etwa 0,1 m liegt.
Die gröbere Absolutgrößenbereichseinteilung in den ROIs ist dadurch gekennzeichnet, dass die Längsbreite eines Bereiches $m_{x,y,n}$ (die Indizes x und y stehen für die Unterteilung innerhalb eines ROI, der Index n indiziert die verschiedenen ROI in einem Bild, die Indizes werden jedoch für eine bessere Übersichtlichkeit im Folgenden nicht dargestellt) entlang der Fahrbahn

$$\varepsilon = 0{,}3 \text{ m}$$

beträgt. Das feine Raster entfällt, wenn die Pixelauflösung längs der Fahrspur zu grob ist.
Die Bereiche m können auch detaillierter festgelegt werden. In der Mitte der Fahrspuren können die Bereiche eine größere Querbreite aufweisen, weil dort bei geeignetem Blickwinkel der Kamera, der vorzugsweise möglichst nahe an der Vertikalen liegt, keine Überlappungen von Fahrzeugabbildern auftreten können, sofern sie - wie in den betrachteten ROIs fast immer der Fall - innerhalb der Fahrspuren fahren. Die Querbreite kann - in Abhängigkeit vom Kamerablickwinkel - dort auf bis zu 1 m erhöht werden.

**Zu analysierender Teil eines ROI**

An einer Stelle einer Fahrspur können nicht mehr als etwa 2 Fahrzeuge pro Sekunde vorbeifahren, daraus ergibt sich, dass man, wenn man z.B. alle

$$T = 0{,}5 \text{ s}$$

eine Komplett-Analyse durchführt, diese Analyse auf einen Bereich längs zur Fahrbahn von der Länge von 4,7 m beschränken kann, und dadurch eine Rechenzeiteinsparung möglich ist.

Die Berechnung mit den genannten Annahmen lautet somit: Es fahren an einer Stelle einer Fahrbahn nicht mehr als etwa zwei Fahrzeuge pro Sekunde vorbei, denn wenn Fahrzeuge in einer Stadt sehr schnell fahren, z.B. 80 km/h, legen sie in einer halben Sekunde 11 m zurück, allerdings können die Fahrzeuge dann im Allgemeinen nicht alle 11 m, d.h. in einem Abstand von maximal ca. 6 m, aufeinander folgen, weil dies zu gefährlich wäre. Wenn sie langsamer fahren, z.B. nur 20 km/h, legen sie nur 5,5 m pro Sekunde zurück, so dass ebenfalls nicht mehr als etwa 2 Fahrzeuge pro Sekunde die Stelle passieren können.

Eine obere Grenzgeschwindigkeit in der Stadt von

$$v_0 = 80 \text{ km/h}$$

wird für Bereiche, in denen man nur 50 km/h fahren darf, angesetzt. Hieraus ergibt sich

$$a_1 = v_0 \, \tau = 3{,}7 \text{ m}$$

wobei

$$\tau = 1/6 \text{ s}$$

der Zeittakt ist, mit dem Bilder gespeichert werden sollen. Der Grund für diesen Wert des Zeittaktes ist, dass dann Fahrzeuge innerhalb des Zeittaktes sich nicht mehr als $a_1$ = 3,7m vorwärtsbewegen, so dass sie sich i. allg. nicht weiter vorwärtsbewegen als ihrer Länge entspricht, d.h. die Fahrzeugbilder zu t und zu t-$\tau$ überlappen im Allgemeinen. Größere Werte für die Zeitrate $\tau$ und/oder den Zeittakt T ohne Verlängerung des zu analysierenden Bereichs sind denkbar, wirken sich jedoch negativ auf die Erfolgsrate aus.

Bei einem vertikalen Blickwinkel ist der Zeitabstand, den Fahrzeuge einhalten müssen, um Kollisionen zu vermeiden, größer als $\tau$ = 1/6 s, daher sind bei vertikalem Blickwinkel mit diesem Zahlenwert generierte Bewegungsbilder nicht überlappend.

Als minimale Fahrzeuglänge wird vorzugsweise eine Länge von

$$a = 3 \text{ m}$$

angenommen. Die Längsbreite eines Bereiches m (Gitterraster in den ROIs s.o.) ist wie oben beschrieben etwa $\varepsilon$ =0,3 m. Eine Analyse ist dann über einen Längsbereich der Fahrbahn eines ROI der Länge

$$a_2 = a_1 \, (T/\tau-1) - a + \varepsilon = 4{,}7 \text{ m}$$

durchzuführen, damit dem Algorithmus kein ausreichend kontrastreiches Fahrzeug entgeht. Im ersten Summanden kann dabei die 1 von T/$\tau$ abgezogen werden, weil zur Objektdetektion ein Zeitdifferenzbild verwendet wird, bei dem das aktuelle und das $\tau$-verzögerte Bild eingesetzt werden. Dies wird weiter unten bei der Beschreibung der Objektdetektion ausführlich erläutert.

Bei Methoden ohne Verwendung von Zeitdifferenzbildern wird die 1 nicht abgezogen.

Aufgrund der Ausdehnung von Fahrzeugen in die Vertikale kann bei einem flachem Kamerablickwinkel in Abhängigkeit des Kamerablickwinkels und des Winkels der Straße gegen die Bildvertikale ein entsprechend kleinerer Bereich als 4,7m verwendet werden. Die nötige Länge lässt sich mit einer Annahme der Höhe der Verkehrsobjekte berechnen. Vorzugsweise wird dabei angesetzt, dass Verkehrsobjekte immer höher als 0,5m sind.

Bei einem Verkehrsschild zur Begrenzung der Geschwindigkeit auf $v_1$ wäre z.B. $v_0$ zu

$$v_0 = v_1 + 30 \text{ km/h}$$

zu wählen, weil üblich einige Fahrzeuge schneller fahren als erlaubt. Durch Einsetzen von $v_1$ lässt sich somit $v_0$ und $a_2$ berechnen, zudem kann der Wert von a z.B. zur Erfassung von Motorrädern und Fahrrädern auf a = 2 m heruntergesetzt werden.

Ein günstiger Bereich für den $a_2$-Bereich innerhalb eines ROI ist ein Bereich, der von Verdeckungen möglichst weit entfernt ist und ca. 1 m Mindestabstand von der Kreuzung aufweist, weil sich dort die Fahrzeuge im Allgemeinen einigermaßen parallel zur Fahrspur bewegen. Dieser Bereich kann interaktiv einmalig vorab eingezeichnet werden: Man gibt erst die Geschwindigkeitsbegrenzung $v_1$ an der Kreuzung ein und ob Motorräder/Fahrräder erkannt werden sollen, daraus berechnet das Kamerarechnersystem $a_2$. Vorzugsweise wird zunächst ein Bereichsbeginn durch das Rechnersystem angenommen. Denkbar ist ein Bereichsbeginn von beispielsweise 1 m Abstand hinter einer Kreuzung. Das Rechnersystem berechnet daraus den Bereich mit Hilfe von $a_2$ und den vorher eingegebenen ROIs.

Gespeichert wird im Rechner jeweils zusätzlich das Bild, das ein $\tau$ zurückliegt und das, welches zwei $\tau$ zurückliegt. Um die Belastung des Hauptprozessors bei der Speicherung und Vorverarbeitung der Bilder so gering wie möglich zu halten, sollte ein oder mehrere FPGAs verwendet werden.

ROIs lassen sich in Abhängigkeit ihrer Größe hierarchisch ordnen. Jede Stufe der Hierarchie erfüllt jeweils eine bestimmte Aufgabe und umfasst das jeweilige ROI der nächstniedrigeren Stufe.

Die oben beschriebenen ROIs mit Länge z.B. 4,7m bilden die unterste Stufe der Hierarchie, d.h. es sind die kleinsten ROIs Sie werden nicht direkt an einer Kreuzung und/oder nicht direkt an Fußgängerüberwegen in das Bild gelegt. Die Bestimmung ihrer Längs-Abmessungen erfolgt durch das beschriebene Vorgehen. Die Querabmessungen der kleinsten ROIs werden gewählt, so dass in deren Bildbereichen übliche Verkehrsobjekte anderer Fahrspuren etc. nicht hineinragen, in der nächstgrößeren Stufe sind die Bereiche auch außerhalb der jeweiligen Fahrspur enthalten, in die ein am entsprechenden Rand der Fahrspur befindliches z.B. 3m hohes Objekt ragt.

Eine der Fahrspuren befindet sich am nächsten zur Kamera, näher zur Kamera kann zusätzlich ein Fußgänger- bzw. Radweg liegen. In letzterem Fall beginnt ein Rand der kleinsten ROI dieser Fahrspur erst an der Stelle der Fahrspur, welche einer Projektion einer 1,8m hohen Linie am Rand zwischen der Fahrspur und dem Fußgänger bzw. Radfahrweg entspricht. Dies bewirkt, dass sich in den kleinsten ROIs fast nie Teile von Fußgänger- und/oder Radfahrerabbildern befinden, da anzunehmen ist, dass Fußgänger und/oder Radfahrer sich nur auf dem Fußweg und/oder Radweg und nicht auf der Fahrbahn befinden und dass Fußgänger und/oder Radfahrer, die sich genau im Randbereich zwischen Fußweg und/oder Radweg und Fahrbahn aufhalten, im Allgemeinem nicht höher als 1,8m sind.

Weiter entfernt von der Kamera als die genannte erste Fahrspur kann/können eine oder mehrere weitere Fahrspur(en) verlaufen. In dem Falle ist auf der zweiten Fahrspur anzusetzen, dass das kleinste ROI beginnt, wo eine Projektion einer (z.B.) 3m hohen Linie genau zwischen den Fahrspuren im Bild erscheint u.s.w.

Die Längsabmessungen der größeren ROIs können vom Bildrand bis gegebenenfalls zur Kreuzung (bei Straßen ohne Kreuzung bis zum anderen Bildrand) gewählt werden.

Eine dritte Stufe größerer ROIs kann bei Kreuzungen von einer Fahrspur von einem Bildrand bis zu den verschiedenen möglichen Fahrspuren hinter der Kreuzung bis zum Bildrand reichen. Dies ist beim Verfolgen von Fahrzeugen über eine Kreuzung von Interesse. Diese dritte Stufe kann optional als eine einzige ROI, welche alle Fahrspuren enthält, definiert werden.

Für jede Stufe der Hierarchie sind diejenigen Bereiche, welche die ROIs teilweise verdecken können (Schilder etc.), auszusparen.

**Bewegungsbilder**

Anschließend werden Bewegungsbilder berechnet: Eines auf der oben definierten kleineren Skala und eines auf der gröberen Skala.

**Kleine Skala (0,1 m)**

Die durch die oben definierte kleine Absolutengrößenskala von 0,1 m gegebene Einteilung bezeichnen wir im folgenden der Einfachheit halber auch als Pixel p. Für jedes Pixel p berechne man

$$q_p = H(|r_p - r_p(t-\tau)| + |g_p - g_p(t-\tau)| + |b_p - b_p(t-\tau)| - \theta).$$

Für H(x) wird definiert H(x) = 0 für x<0 und sonst H(x) = 1. Dabei wird in den ROIs vorzugsweise eine Umrechnung der RGB-Bilddaten zu rg-Daten vorgenommen, wobei r=R/(R+B+G), g=G/(R+B+G) und b=1-r-g gilt. Dadurch werden etwaige Schatten, wie an Real-Word-Daten festgestellt wurde effizient aus dem Bild entfernt. Andere Farbkodierungen sind ebenfalls denkbar. Man kann die Funktion empirisch für das vorhandene Kamerasystem optimieren. Wenn der Gesamthelligkeitswert insbesondere nachts einen Schwellenwert unterschreitet, wird vom rg-Bild auf das RGB-Bild umgeschaltet, wobei die folgende Formel verwendet werden kann

$$Grey_p = (R_p + B_p + G_p)/3,$$

$$q_{p,2} = H(|Grey_p - Grey_p\ (t-\tau)| - \theta_2).$$

In analoger Weise kann statt RGB auch YUV, HSV oder ähnliches verwendet werden.

Bei Dunkelheit wird bei Verwendung eines IR-Kanals vorzugsweise folgende Formel angewendet

$$q_{p,IR} = H(|IR_p - IR_p(t-\tau)| - \theta_{3,IR}),$$

wobei $IR_p$ für den Wert des IR-Kanals steht.

Die Werte der Gitterpunkte können beispielsweise auf die nearest-neighbor-Kamerapixelwerte gesetzt werden. Dies bewirkt eine höhere Kontrastsensitivität als ein Mittelungsverfahren.

**Gröbere Skala: Bereiche m mit Breite etwa 0,3 m längs zur Fahrbahn**

Es werden einmalig, d.h. nicht zum echtzeitkritischen Teil des Algorithmus gehörend, die eingezeichneten ROIs in aneinander angrenzende Bereiche unterteilt. Längs der Fahrspur in z.B. ca. 30 cm entsprechende Pixelbereiche, quer zur Fahrspur in ca. 10 cm breite Bereiche - falls die Pixelbreite mehr als 10 cm bzw. längs mehr als 30 cm entsprechen sollte, entsprechend mehr.

Die Bereiche m können noch detaillierter festgelegt werden. In der Mitte der Fahrspuren können die Bereiche eine größere Querbreite aufweisen, weil dort bei geeignetem Blickwinkel der Kamera, der vorzugsweise möglichst nahe an der Vertikalen liegt, keine Überlappungen von Fahrzeugabbildern auftreten können, sofern sie - wie in den betrachteten ROIs fast immer der Fall - innerhalb der Fahrspuren fahren. Die Querbreite kann - in Abhängigkeit vom Kamerablickwinkel - dort auf bis zu 1 m erhöht werden.

Zusätzlich zu den Indizes der Pixel dieser Bereiche werden die Bereiche noch vorab ausgedehnt über die beschriebenen kleinsten ROIs hinaus zu den erwähnten nächstgrößeren ROIs, jedoch bleiben Bereiche von Bäumen und Verdeckungen weiterhin ausgespart, insbesondere um in Fällen besonders großer Fahrzeuge das gesamte Fahrzeug zu erfassen, wie später erläutert wird. Des Weiteren kann dieser erweiterte Bereich bis zurück über den Kreuzungsbereich reichen, insbesondere für extrem lange Fahrzeuge.

Für jeden Bereich m eines jeden ROI - d.h. der nicht-vergrößerten ROIs - wird folgende Funktion $f_m$ berechnet:

$$f_m = \sum_{\substack{q_p\text{-Werte} \\ \text{im Bereich } m}} q_p \ .$$

Aus der Funktion $f_m$ wird eine Funktion $g_m$ berechnet, die eine geeignete Binarisierung darstellt:

$$g_m = H(f_m - [(\text{Anzahl der } q_p\text{-Werte im Bereich m}) \cdot \rho])$$

wobei $\rho$ eine Zahl zwischen null und eins ist.

Man kann die Funktion $g_m$ als (grobkörniges) Bewegungsbild bezeichnen.

Ein besonders einfacher und schneller Algorithmus ist der folgende: Man detektiert nur am Ende der ROIs in einem Bereich der Breite $a_2$, der von der Kreuzung wegführenden Fahrbahn auf den mittleren Bereichen (d.h. etwa nur 4 mal die Anzahl der Spuren pro Straße) ob mindestens ein $g_m$ positiv ist. Nur dann wird im jeweiligen ROI nach einem Fahrzeug gesucht, das diesen aktiven Bereich enthält.

Falls man eine Analyse über einen längeren Bereich als $a_2$ bevorzugt, lassen sich bei sehr gekrümmtem Straßenverlauf die Bereiche der Krümmung anpassen und zum Krümmungskreiszentrum hin stauchen, so dass weiterhin eine 2-d-Matrix von Bereichen bleibt, bei der die beiden Koordinaten längs und quer zur Fahrbahn ausgerichtet sind. Die Stauchungswerte sind vorab gesondert zu speichern, so dass aus Bereichsclustern später mit Hilfe der Welt-/Bild-Transformation direkt Fahrzeugabsolutgrößenabmessungen näherungsweise berechnet werden können.

**Schatten- und Beleuchtungsanalyse**

Wie aus dem Flussdiagramm in Fig. 1 ersichtlich, werden die Bewegungsbilder einer Schatten- und Beleuchtungsanalyse unterzogen. Hierfür stehen verschiedene Ansätze zur Verfügung.

Zum einen entfernt die erwähnte Umrechnung der RGB-Bilddaten zu rg-Daten Schatten aus dem Bild.

Eine alternative Möglichkeit besteht in einer 4-Schattenanalyse, die auch in die noch später erläuterte Fahrzeugerkennung integrierbar ist, wobei vorzugsweise die RGB-Daten verwendet werden. Es wird angenommen, dass der Schatten eines Fahrzeuges an der Vorderkante des Fahrzeuges auftritt und nicht an der Hinterkante oder umgekehrt oder vorn und hinten zugleich, oder dass das Fahrzeug keinen relevanten Schatten wirft. Einer der ersteren beiden Fälle tritt ein, wenn ein Fahrzeug sich teilweise in einem Schatten, insbesondere z.B. einer Häuserwand, befindet, der dritte Fall, wenn ein Fahrzeug von der Sonne angestrahlt wird oder der obere Teil des Fahrzeuges von der Sonne angestrahlt wird und wenn nur ein mittlerer Teil des Fahrzeuges von einem Schatten, insbesondere z.B. eines Schildes, Laternenpfahles oder Mastes, verdeckt wird, und der vierte Fall tritt ein bei Bewölkung und insbesondere, wenn ein Fahrzeug sich gerade in einem Häuserschatten befindet. Dies sind nur vier Fälle, jedoch wird einer davon fast immer zutreffend sein. Denn ausgespart sind praktisch nur Fälle, in denen zufällig gerade nur vom vorderen oder hinteren Teil des Schattens des Fahrzeuges ein Teil von einem anderen Schatten verdeckt ist - dies ist extrem selten und wenn, dann im Allgemeinen nur sehr kurzzeitig der Fall, nämlich bis sich das Fahrzeug soweit vorwärtsbewegt hat, dass wieder einer der vier beschriebenen Fälle zutrifft. Für die Fahrzeugprototypen kann ein $q_{p,2}$ -Bild bzw. das entsprechende $g_m$-Bild berechnet werden, dabei je 4 mal, nämlich mit den jeweiligen oben beschriebenen verschiedenen Schattenverläufen. Die Schatten ergeben im $q_{p,2}$ -Bild einen je $\tau$ mal Fahrzeuggeschwindigkeit breiten aktiven Bereich, daher sind die beschriebenen vier Schattenverläufe hierfür gut verwendbar.

Für den seltenen Fall, dass eine Erhebung höher als 15 cm innerhalb des Schattens des Fahrzeuges liegen sollte, wie z.B. eine Hecke, die Fahrbahnen trennt und auf die in ungünstigem Fall Fahrzeugschatten fallen können, wird diese vorab im ROI gekennzeichnet und als solche berücksichtigt. Wenn im Schatten hingegen ein anderes Fahrzeug läge, würde dies im bewegungsbasierten Ansatz ohne Farbrenormierung zunächst als Fahrzeugkette detektiert. Diese selten auftretende Zusatzaufgabe tritt bei der alternativen rg-Analyse oder ähnlichen Verfahren nicht auf.

Die 4-Schattenanalyse liefert ferner eine grobe Beleuchtungsanalyse. Wirft beispielsweise das Fahrzeug einen Schatten, so bedeutet dies, dass gerade die Sonne scheint. Optional kann die 4-Schattenanalyse mit der rg-Analyse kombiniert werden: Die 4-Schattenmethode ist besonders geeignet bei starken Schatten, die rg-Analyse bei schwachen Schatten.

Im Gegensatz zur rg-Schattenanalyse kann die 4-Schattenanalyse auch bei Schwarz-Weiß-Kameras verwendet werden.

Im Falle einer solchen Beleuchtungsanalyse, bei der vorab einmalig Ergebnisse für alle möglichen in Frage kommenden Sonnenstände und/oder Rotationswinkel - mit einer bestimmten Auflösung - für alle Fahrzeugprototypen gespeichert werden, belastet dies nicht den Rechenzeitbedarf, dafür den Speicherbedarf.

**Bestimmen von Fahrzeughypothesen**

Nachfolgend wird ein bevorzugtes Verfahren zur Bestimmung von Fahrzeughypothesen und der Fahrzeugdetektion vorgestellt.

**Fahrzeugdetektion, grob**

Es werden benachbarte Bereiche m, in denen $g_m > 0$ gilt, d.h. die aktiv sind, jeweils in Clustern zusammengefasst. Falls eine Liste einen Bereich m enthält, der am Rand der ROI liegt, können weitere aktive Bereiche hinzugefügt werden unter Verwendung der oben beschriebenen vergrößerteren ROIs. Dies liefert die ersten groben Hypothesen $H_k^g$ über bewegten Objekte zur Zeit t.

Alle Pixel in einem Bereich $H_k^g$, für die $q_p > 0$ gilt, werden als $H_k$, als genauere Hypothese für ein Objektbewegungsbild bezeichnet.

Zur Rechenzeiteinsparung kann auf die $H_k$ -Berechnung verzichtet werden. Sie kann vorzugsweise nach der Größenbestimmung der $H_k^g$, die im folgenden erläutert wird, erfolgen. Das hat den Vorteil, dass sie nur für die Hypothesen, die für ein Fahrzeug in Frage kommen, durchgeführt wird.

Eine Umsortierung von Bereichen oder Pixel in einer Liste gemäß der längs-zur-Fahrbahn und quer-zur-Fahrbahn-Richtungs-Matrix kann vorzugsweise mit einem sogenannten Linearzeitsortieralgorithmus (z.B. MSD-first radix sort, optional kann dabei in einem Schritt nach dem ersten Byte bzw. ersten zwei Bytes sortiert werden) vorgenommen werden.

### Grobe Größenabschätzung

Die Projektionen der absoluten Größenabmessungen der zusammengefassten Bereiche $H_k$ (bzw. $H_k{}^g$) auf die Fahrbahnebene werden abgeschätzt anhand der Referenzgrößen.

Zudem werden die Abmessungen quer zur Fahrbahn - d.h. senkrecht im Bild zur Richtung längs der Fahrspur - und längs der Fahrbahn bestimmt.

Alternativ ist es auch denkbar, die Richtung quer zur Fahrspur auf der Fahrspur zu verwenden. Optional kann eine Skalierung einer solchen Gitterstruktur auf der Fahrbahnebene bei flachem Blickwinkel durchgeführt werden, damit Kamerapixelwerte zur Erzeugung der Werte auf den Gitterpunkten nicht unnötig vervielfältigt werden.

Bei der Bestimmung der Breiten quer zur Fahrbahn muss ein erster Ansatz gemacht werden. Ein günstiger Ansatz ist: Das Fahrzeugobjekt überdeckt auf der realen Fahrbahn einen Bereich quer zur Fahrbahn von ca. 1,5 m. Aus diesem Ansatz wird mit Hilfe des bekannten Kamerablickwinkels eine hypothetische Höhe des Fahrzeuges ermittelt unter der Annahme, dass es quaderförmig wäre mit einer Seite des Quaders parallel zur Fahrbahn. Bei einer dadurch ermittelten hypothetischen Höhe von mehr als ca. 2m kann eine zweite Rechnung durchgeführt werden mit der Annahme, dass das Fahrzeugobjekt auf der realen Fahrbahn einen Bereich quer zur Fahrbahn von ca. 3m überdeckt. Die Zahlenwerte sind Eckwerte, die bei einer erfindungsgemäßen Erkennung optimiert werden können.

Bei Hypothesen $H_k$, deren Abmessungen längs oder quer zur Fahrbahn nicht in einem vorgegebenen Bereich liegen, der in Abhängigkeit vom Blickwinkel für die größten und kleinsten Prototypen ermittelt wird, können diese vorläufig als ,Nicht-Fahrzeug-Objekt' klassifiziert werden.

Bei zu großen Quer- oder Längs-Breiten findet eine Klassifizierung als mehrere Fahrzeuge, im folgenden Fahrzeugkette genannt, statt. Die Analyse von Fahrzeugketten wird weiter unten behandelt.

Man speichert dabei, ob ein Bereich $H_k$, insbesondere ein zu kleiner Bereich, am Rand des Bildes liegt oder am Rand eines der anfangs einmalig eingezeichneten verdeckten bzw. nicht-ausgewerteten Bereiche. Diese Information kann beim Tracken des Objektes verwendet werden, um zu einem geeigneten Zeitpunkt, wenn ein Fahrzeug nicht mehr verdeckt oder am Rand ist, die benötigten Fahrzeugdaten zu ermitteln.

Man ordnet die Bereiche $H_k{}^g$ bzw. $H_k$ z.B. bzgl. Wurzel aus der Summe der Quadrate der Längs- und Querbreiten. Die $H_k{}^g$ bzw. $H_k$ werden dann der Größe nach analysiert.

Ab einer minimalen Größe (z.B. eines Durchmessers von weniger als 0,7 m), mindestens eines $H_k$ bzw. $H_k{}^g$ kann als einfache Möglichkeit die weitere Untersuchung weiterer $H_k{}^g$ bzw. $H_k$ unterbleiben.

Aus dem oben beschriebenen ersten Ansatz der Fahrzeugbreite von 1,5 m bzw. 3 m ergeben sich bei zu kleinen Objekten keine reell-positiven Werte für die Hypothesen der Fahrzeughöhen. In dem Fall kann man auch, wenn man Motorräder oder Fahrradfahrer erkennen möchte, im zweiten Schritt eine niedrigere Breite, z.B. 0,4 m ansetzen. Wenn der dann erneut geschätzte Objektdurchmesser immer noch keine 0,7 m erreicht, kann man die Untersuchung des $H_k$ beenden.

Weiter unten wird die genaue Ermittlung der Breite und Höhe der Fahrzeughypothesen beschrieben.

Wenn mindestens zwei Hypothesen $H_k$ existieren, bei denen die Querbreite ausreichend wäre für ein Fahrzeug, die Längsbreite jedoch zu kurz, kann man untersuche, ob jeweils längs der Fahrbahn vor oder hinter der Hypothese im oben erläuterten Abstand eine weitere derartige Hypothese existiert und gegebenenfalls derartige Hypothesen $H_k$ zu einer zusammenschließen.

Auch nah benachbarte quer zur Fahrspur liegende ähnliche $H_k$ bzw. $H_k{}^g$ können zu einem zusammengeschlossen werden. Quer zur Fahrbahn ist der Abstand, in dem potentiell zu verbindende Gebiete verbunden werden, bevorzugt kleiner als längs.

Dies wird wiederholt, falls die längs-zur-Fahrbahn- bzw. quer-zur-Fahrbahn-Breite dann noch nicht ausreichende Größe hat und ein weiteres separates $H_k{}^g$ bzw. $H_k$ in geeignetem längs-zur-Fahrbahn- oder quer-zur-Fahrbahn-Abschnitt vorhanden ist.

Es kann mit Hilfe der aus dem $\tau$- und $2\tau$-verzögerten Bild gewonnenen, gleichartigen Bewegungsbilder getestet werden, ob die hypothetische Gesamt-Fahrzeuglänge bis auf etwa 0,3 m unverändert ist. Etwa 0,3 m ergeben sich aus empirischen, in der Regel nicht überschrittenen maximalen Bremsbeschleunigungen unter Berücksichtigung eines Fehlertoleranzwertes. Falls ja, kann der entsprechende Bereich als eine Hypothese für ein Fahrzeug definiert werden.

### Detektion der Fahrzeugumrandung

Die Umrandung der Bereiche $H_k{}^g$ stellt eine erste grobe Hypothese über die Fahrzeugränder dar. Die Umrandung der $H_k$ stellt eine im Prinzip bis auf Pixel genaue Hypothese dazu dar.

Die Umrandung kann man wie folgt erhalten: Zunächst werden die aktiven Bereiche m wie folgt geordnet. Man ordnet die Bereiche zuerst nach Längs-zur-Fahrbahn-Koordinate des Bildes, die im folgenden der Einfachheit halber als x-Koordinate bezeichnet wird, zusätzlich für je gleiche x-Werte nach der dazu auf der Fahrbahn senkrechten Bildkoordinate, die als y-Koordinate bezeichnet wird.

Fast alle Fahrzeuge haben im beschriebenen x-y-Koordinatensystem eine eingeschränkte Form: Die Umrandung lässt sich in x-Richtung als doppelte Funktion von y beschreiben: eine für die Vorderkante des Fahrzeuges, eine für die Hinterkante - abgesehen von Details wie den Zwischenräumen zwischen den Vorder- und Hinterreifen, die zur Erkennung jedoch nicht benötigt werden. Demgemäss gilt: Man geht die nach x-y-Werten geordnete Liste durch und nimmt für jeden vorkommenden y-Wert die beiden Bereiche größten x-Wertes und kleinsten y-Wertes. Das Verfahren ist besonders deshalb geeignet, weil Vorder- und Hinterkanten der Fahrzeuge fast immer besonders viel geschlossene Aktivität im Bewegungsbild erzeugen. Diese Wertepaare speichert man als Umrandung ab. Man kann kleinere Pixelfehler (inaktive Pixel, die zur Vorder- oder Hinterkante gehören) ausgleichen, indem man Wertepaare, bei denen der x-Wert mehr als z.B. 20 cm kleiner ist (größer ist) als das Minimum der beiden y-Werte der y-benachbarten Wertepaare der Vorderkante (Hinterkante) des Fahrzeuges, ausschließt und künstlich durch den Mittelwert der beiden Nachbarn ersetzt.

Man kann auch jeweils mehr Nachbarn miteinbeziehen und somit zwei- oder dreipixelbreite Fehler korrigieren. Korrekturen sollten auf ca. 20 cm Breite beschränkt bleiben.

Man kann die gefundene Umrandungen in einer Struktur mit einer mehrdimensionalen Matrix abspeichern: Der jeweils untere linke Eckbereich wird gespeichert und die übrigen Bereiche um diesen Wert verschoben und die x- und y-Breiten der Bereiche $H_k$ werden gespeichert. Es gibt dann für jeden y-Integer-Wert bis zum Maximum zwei x-Werte, die wiederum Integer sind.

**Ermittlung der Geschwindigkeit der Fahrzeughypothesen**

Aus dem (t-2τ)-Bild und (t-τ)-Bild lässt sich wieder ein Bewegungsbild ermitteln und Fahrzeugobjekthypothesen generieren wie beschrieben. Alternativ ist dieses Bewegungsbild beispielsweise auch aus dem (t-2τ)-Bild und t-Bild ermittelbar. Nun werden die Mittelwerte der Fahrzeughypothesenumrandungen mit denen des ersten Bewegungsbildes (das aus den Bildern zu t und t-τ gewonnen wurden), verglichen. Ein Fahrzeug bewegt sich in der Stadt bei 50km/h Geschwindigkeitsbegrenzung typischerweise mit nicht mehr als 90 km/h, rückwärts mit nicht mehr als 50 km/h, daher können sich Fahrzeugmittelpunkte, bei Zulassung eines Toleranzfehlers etwa eines halben Meters, in der Zeitspanne τ nicht weiter als etwa 4,5 m vorwärtsbewegen bzw. 3 m zurück. Nur Fahrzeughypothesen mit Mittelpunktwerten in dem entsprechenden Bereich längs der Fahrbahn kommen für eine Identifizierung mit einem Fahrzeug des vorherigen Bildes in Frage. Dadurch können Fahrzeuge als gleich identifiziert werden. Der Abstand der Mittelpunktwerte mal τ entspricht dann einem 2-d-projizierten Geschwindigkeitsvektor, aus dem eine Hypothese über die Fahrzeuggeschwindigkeit berechnet werden kann.

Bei extrem hohen Genauigkeitsanforderungen kann beispielsweise ein Entzerrungsalgorithmus für Verzerrungen der Optik eingesetzt werden. Da die Fahrbahn zumindest in einem kleinen ROI in der Wirklichkeit durch eine Ebene genähert werden kann, kann dies im x-y-Koordinatensystem etc. im Prinzip in erster Näherung vorab korrigiert werden, indem dieses Koordinatensystem bei der Definition durch den Nutzer auf das Abbild der Straße angepasst werden kann. Bei in der Ebene gekrümmtem Straßenverlauf kann dieser Verlauf zudem, wie an anderer Stelle beschrieben, wiederum durch ein entsprechendes Koordinatensystem beschrieben werden.

Aus der vorderen Seite der Umrandung des älteren Differenzbildes und der hinteren Seite der Umrandung des jüngeren ergibt sich z.B. eine Hypothese der Umrandung des Objektes zu t-τ im Farbbild. Um Ausreißerfehler zu vermeiden, wird der Durchmesser robust bestimmt, z.B. indem er gemittelt wird über den Durchmesser und die zwei nächst kleineren Werte für die Durchmesser, die diese Hypothese für ein Objekt hätte, wenn das Wertepaar für den Durchmesser gelöscht würde. Der Durchmesser dieser Umrandung im Farbbild liefert die Abschätzung für die Projektion des 3-d-Durchmessers des Fahrzeuges bzw. Objektes. Dies liefert für eine grobe Klassifizierung des Fahrzeuges, d.h. für viele wichtige Anwendungsfälle bereits ausreichend genaue Daten.

Der beschriebene Ansatz zur Ermittlung der Geschwindigkeit kann beschleunigt werden. Hierfür wird angenommen, dass das Fahrzeug im jeweils nächsten Bewegungsbild den gleichen Bereich einnimmt, jedoch um einen Betrag entsprechend seiner Geschwindigkeit mal τ verschoben ist. Zudem kann man einen zusätzlichen entsprechend kleineren Bereich für eine eventuelle Beschleunigung des Fahrzeuges ansetzen. Damit kann der Bereich des Fahrzeugs im Bewegungsbild, das aus dem t-τ und (t-2τ)-Bild gebildet wird, und das wir als $H_k^g$ (t-τ, t-2τ) bezeichnen, wie folgt bestimmt werden: Man ermittelt die Bereiche, die sich in der Fahrzeughypothese, die aus dem t und t-τ-Bild gewonnen wurden, die auch im aus dem (t-τ)- und t-2τ-Bild bestimmten Bewegungsbild aktiv sind. Diesen Bereich vergrößert man um die angrenzenden aktiven Bereiche. Dies liefert eine erste Hypothese über $H_k^g$ (t-τ, t-2τ).

Bei großen Geschwindigkeiten benachbarter Fahrzeuge auf der derselben Fahrspur kann gemäß der Annahme, dass das gerade betrachtete Fahrzeug eine ähnliche Geschwindigkeit haben wird wie das benachbarte, diese Analyse weiter optimiert werden.

Bei den weiter unten beschriebenen alternativen Verfahren zur Fahrzeugerkennung, die nicht bewegungsbasiert sind, gibt es keine untere Grenzgeschwindigkeit zur Detektion von Objekten.

Speziell beim bewegungsbasierten Ansatz gibt es eine solche untere Grenzgeschwindigkeit für eine erstmalige Detektion des Objektes. Wenn ein Fahrzeug sich mehr als z.B. 1,3 $q_p$-Pixel im Zeittakt $\tau$ vorwärtsbewegt, wird eine geeignete Kontrastkante des Fahrzeugs im $q_p$-Bild sichtbar sein und somit eine Fahrzeugdetektion möglich. Falls 1 Pixel gemäß obiger Definition 0,1m entspricht, entsprechen 1,3 $q_p$-Pixel ca. 13 cm. Im Falle eines Blickwinkels $\alpha$ - d.h. der Winkel zwischen Kamerabildmittenstrahl und der Senkrechten - relativ nahe der Senkrechten und bei $\tau$=1/6 s ergibt sich

$$V_{grenz} = 13\ \text{cm} \cdot 6/\text{s} \approx 0{,}78\ \text{m/s} \approx 2{,}8\ \text{km/h}.$$

D.h., auch für noch recht kleine Geschwindigkeiten unter 5 km/h liefert das $q_p$-Bild für Fahrzeuge gute Daten.

Bei flachen Blickwinkeln $\alpha$ ist ein Faktor cos $\alpha$ zu berücksichtigen. Für den Fall, dass die zu analysierende Straße z.B. entlang der Bildvertikalen verläuft, ergibt sich damit

$$V_{grenz}(\alpha) = 13\ \text{cm} \cdot 6/\text{s} / \cos\alpha \approx 0{,}78\ \text{m/s} / \cos\alpha \approx 2{,}8\ \text{km/h} / \cos\alpha.$$

In dem Falle ergibt beispielsweise sich bei einem angenommenen extrem flachem Blickwinkel $\alpha$=80° ein Grenzwert $v_{grenz}(80°) \approx 16$ km/h.

Durch Kombination mit einem 1-d-Fourieransatz (siehe unten), der bei dicht an dicht folgenden Fahrzeugen und bei stehenden Fahrzeugen gute Daten liefert, lässt sich insgesamt die Qualität der Ergebnisse des obigen bewegungsbasierten Ansatz weiter erhöhen.

**Zuordnung der Fahrzeughypothesen zu gespeicherten Prototypen**

Die zu den in Form von Eckvektoren der 2d-Flächen gespeicherten Fahrzeugprototypen gehörigen 2-d-Umrandungen werden vorzugsweise nach Transformation der Eckvektoren auf die lokale Ebene des jeweiligen ROI im 3-d-Raum und anschließender 2-d-Projektion als Vektormenge charakterisiert.

Zu einem jeden Prototyp gibt es Schätzwerte seiner üblicherweise minimalen bzw. maximalen Bodenlänge. Bei einem PKW ist beispielsweise eine Bodenlänge zwischen ca. 2,5m und 6m üblich. Mit den beiden extremen Bodenlängen kann der übliche Durchmesserbereich der 2-d-Projektion des Prototypen längs der Fahrspur ermittelt werden - dies erfolgt für jeden Prototypen einzeln. Anschließend wird ermittelt, für welche dieser Prototypen der 2-d-Durchmesser der Fahrzeug-Hypothese zwischen den beiden ermittelten extremen Werten liegt. Die übrigen Prototypen scheiden für diese Fahrzeug-Hypothese aus.

Anschließend kann optional die Hypothesen-Umrandung mit einer solchen der verbleibenden in Frage kommenden Prototypen verglichen werden. Die Umrandung kann in Form von x-y-Wertepaaren gespeichert werden, wobei x die Richtung längs zur Fahrbahn darstellt. Dazu werden die x-Werte der Umrandung, die getrennt bzgl. Vorder- und Hinterkante der Hypothese gespeichert sind, von den zugehörigen x-Werten der Prototypen abgezogen - ausgenommen ein z.B. etwa 4% der Fahrzeughypothesenlänge betragender Bereich oben und unten, um auch sich ein wenig schief zur Fahrbahn bewegende Fahrzeuge geeignet zu berücksichtigen - und aufaddiert. Dies ergibt einen Translationsfehler, der auf den Hypothesenbereich des Fahrzeuges angewendet werden kann und damit direkt eliminiert werden kann. Anschließend wird vorzugsweise wieder die Summe gebildet, jedoch der Beträge der Differenzen statt der Differenzen selbst. Dies ergibt einen ‚Fehler', einen Unterschied zwischen Hypothese und Prototyp. Der Prototyp mit dem kleinsten ‚Fehler' wird als Hypothese über den Prototyp des Fahrzeugs verwendet werden. Die Hypothese kann gegebenenfalls detaillierter untersucht werden oder aber als endgültige definiert und gespeichert werden.

Eine genauere Hypothese über den Prototypen lässt sich erzeugen, indem ein Ecken- oder Kantenbild etwa im Bereich der Hypothese berechnet wird, und diese mit denen der Prototypen verglichen werden, wobei beim Vergleich einer Musterbaumstruktur gefolgt werden kann, d.h., zunächst werden z.B. zwei sehr verschiedene Prototypen mit den realen Daten verglichen, für den besseren Match können dann detaillierter unterschiedene Unterprototypen, getestet werden usw. Die Verwendung des Eckenbildes hat den Vorteil, dass nur wenige Punkte mit den realen Daten - z.B. einem ortsaufgeweichten Eckenbild - verglichen werden müssen statt eines Vergleichs mit einem vollständigen 2d-Bild, was erheblich Rechenzeit einspart.

**Lösung von Spezialfällen**

Wenn eine Kamera direkt von oben schaut bzw. einige Fahrzeuge auf einigen Fahrspuren immer genau gerade auf die Kamera zufahren bzw. davon weg, kann der bisher beschriebene Algorithmus bei Fahrzeugen die oberen 2-d-Flächen (Heck, Heckscheibe, Dach, Kühlerhaube, etc.) mit Hilfe der Fahrzeugumrandungshypothesen nicht direkt erkennen.

Im Folgenden wird ein Algorithmus für den genannten Problemfall beschrieben, dass ein Fahrzeug immer nur etwa frontal bzw. von der Rückseite bzw. von oben zu sehen ist. Es reicht aufgrund der vertikalen Kamerablickrichtung bzw. des nicht von der Seite abgebildeten Fahrzeuges aus, die Schnittpunkte der Symmetrieebene des Prototypen und der 2-d-Flächen des Prototyps näherungsweise zu berechnen und diese in das Bild und dann auf die Kamerabildebene zu projizieren. Optional kann zur Erhöhung der Robustheit eine Mittelung über einige Pixel neben der Symmetrieebene erfolgen. Man ermittelt in diesem Bereich mittels Kantendetektion Hypothesen für Kanten. Dies ergibt eine eindimensionale, positive Funktion. Die Funktion wird mit der Funktion eines Prototypen einer Dachluke bzw. eines Dachgepäcks ortsaufgeweicht mit einem Ähnlichkeitsmaß verglichen. Wenn die Ähnlichkeit über einem Schwellenwert liegt, kann die Hypothese über Dachluke bzw. Dachgepäck definiert werden. Die Nähe der Ähnlichkeit zum jeweiligen Schwellenwert liefert ein Maß für die Sicherheit der Hypothese, so dass beispielsweise ein Bulli und ein PKW bzw. verschiedene Hecktypen auch bei einem Blickwinkel relativ nahe der Vertikalen bzw. Blick nahezu von vorn oder hinten differenziert werden können.

## Verfahren bei Dunkelheit

Nachts bzw. allgemein, wenn die Gesamthelligkeit einen Schwellenwert unterschreitet, sind zur genauen Zählung von Fahrzeugen zunächst Fahrzeuglichter zu detektieren. Wenn kein Infrarotkanal zur Verfügung steht, so ist für hohe Erkennungsraten nachts ein größerer Bereich nötig als der oben durch $a_2$ definierte. Vorzugsweise wird dieser bestimmt zu

$$a_{2,\text{nachts}} = a_2 + a = a_1 \cdot (T/\tau - 1) + \varepsilon,$$

bei obigen Parameterwerten ergäbe dies z.B. 7,7 m. Wenn ein geeigneter Infrarotkanal zur Verfügung steht, bei dem ein großer Teil des Fahrzeuges sich von seiner Umgebung kontrastmäßig abhebt, kann $a_{2,\text{nachts}} = a_2$ gesetzt werden.

## Grobe Schätzung der Anzahl der Fahrzeuge mit 1-d-Fourieransatz

Zur groben Schätzung der Anzahl der Fahrzeuge lässt sich ein 1-d-Fourieransatz entlang einer Linie bzw. eines Bereiches einer Fahrspur, dessen Bildbereich üblich nicht von Verkehrsobjekten anderer Fahrspuren bzw. Wege verdeckt wird, über den der Mittelwert der RGB- bzw. YUV-Werte der Pixel quer zur Fahrspur berechnet wird entlang der Fahrspur verwenden, indem die am stärksten vorkommende(n) Wellenlänge(n) - beschränkt auf Bereiche zwischen 5 m und z.B. der Längs-der-Fahrbahn-Länge des jeweiligen ROI - neben dem Konstantanteil entlang der Linie detektiert werden und die Länge der Linie geteilt durch den Wellenlängenwert des am stärksten vorkommenden Wellenlängenbereiches als grobe Abschätzung der Anzahl der Fahrzeuge auf der jeweiligen Fahrspur im ROI verwendet wird. Hierbei werden vorzugsweise eventuelle Fahrspurmarkierungen wie Abbiegepfeile aus dem Bereich für die 1d-Fourieranalyse vorab mit Hilfe der interaktiven Grafik ausgeklammert und die Werte quer zur Fahrspur neben diesen Markierungen entsprechend höher gewichtet, so dass jeder längs-zur-Fahrspur-Abschnitt etwa gleichermaßen berücksichtigt wird.

## Grobe Erfassung von Fußgängern/Radfahrern

Neben den ROIs, die auf den Fahrbahnen definiert wurden, können entsprechende ROIs auf Bürgersteigen und/oder Radwegen etc. definiert und analysiert werden. Mit dem erfindungsgemäßen Bewegungsclusteransatz kann eine grobe Schätzung der Anzahl von Fußgängern erstellt werden. Denkbar ist beispielsweise auch eine Extraktion unverdeckter Fußgänger mit dem Ansatz gemäß der DE 198 31 413 A1. Alternativ kann eine Kopfbereichsdetektion anhand eines geeignet binarisierten Kantenbildes durchgeführt werden, wobei eine Kopfbereichsdetektion durch Detektion darunter zur Person gehöriger ortsaufgeweichter Kanten untermauert werden kann. Die Objektdetektion kann alternativ mit dem CSC-Verfahren durchgeführt werden. Die Beschränkung auf die Analyse der ROIs, also kleiner Gebiete anstelle der Analyse im gesamten Verkehrsraum verringert den Rechenzeitbedarf der Verfahren entscheidend. Mit diesem Ansatz lässt sich grob bereits eine Schätzung des gesamten Fußgänger/Fahrradverkehrs ermitteln, weil dieser im Allgemeinen irgendwann eines der ROI überqueren muss. Durch zusätzliches Verfolgen von Fußgängern bzw. Radfahrern analog wie im Folgenden beschrieben, läst sich eine genauere Erfassung des gesamten Fußgänger/Fahrradverkehrs durchführen.

## Verfolgen von Verkehrsobjekten z.B. über eine Kreuzung

Nachfolgend wird das Verfolgen bzw. das Tracking eines Fahrzeuges im Bereich einer Kamera näher erläutert.

Das Verfolgen von Verkehrsobjekten ist alternativ oder kumulativ mit der weiter unten beschriebenen erfindungsgemäßen Wiedererkennung von Verkehrsobjekten einsetzbar.

Für eine Erfassung von Routendaten kann auch auf die Detektion eines Fahrzeugs vor den Kreuzungen verzichtet werden. Denn wenn ein Verkehrsobjekt in den ROIs hinter einer Kreuzung detektiert wird, können die Fahrzeuge erkannt werden und ihre Farbinformationen gespeichert werden, wie weiter unten beschrieben. Wenn diese Informationen zu benachbarten Kreuzungen (bzw. zur Zentrale) übertragen werden, kann man dort wiederum in den ROIs hinter der Kreuzung die Fahrzeuge detektieren und vergleichen und somit wiedererkennen. Die erfasste Route ist dann um das Anfangsstück, nämlich von vor der ersten Kreuzung bis hinter die erste Kreuzung kürzer, und es müssen die Daten mit Fahrzeugen, die eine Kreuzung über irgendein ROI verlassen, verglichen werden.

Selbst dieses vereinfachte Verfahren - beispielsweise in Kombination mit dem 1-d-Fourieransatz - ist sehr gut geeignet, um Ampeln dynamisch zu steuern. Denn es wird damit detektiert, was von einer Kreuzung auf eine gegebene zweite zufährt. Damit können die Ampeln rechtzeitig geschaltet werden. Dies ist mit den bisherigen Induktionsschleifendaten nicht so gut möglich, weil diese oft vor Kreuzungen positioniert sind und damit erst Daten liefern, wenn ein auf die Ampel zufahrendes Fahrzeug bereits abbremst.

Im Folgenden wird das Verfahren zum Verfolgen erläutert. Die Fahrzeuge werden innerhalb eines großen Bereichs der ROIs vor einer Kreuzung detektiert. Die Geschwindigkeitsschätzung liefert einen Geschwindigkeitsschätzwert v für die einzelnen Fahrzeuge. Der Wert v wird mit dem Mittelpunkt des Fahrzeughypothesenbereichs verrechnet, um den Ort des Fahrzeuges zum Zeitpunkt t+T vorherzusagen. Der Hypothesenbereich wird auch um $T \cdot v$ virtuell weiterbewegt. Um den Fehler, der durch die Beschleunigung der Fahrzeuge entsteht, zu verringern, wird um den virtuellen Hypothesenbereich ein Korrekturbereich zugelassen, der den üblicherweise nicht überschrittenen Beschleunigungswerten entspricht.

Im vorhergesagten Bereich ohne den Korrekturbereich werden dann die aktiven $q_p$-Bereiche zusammengelinkt in einem $H_k$-entsprechendem Gebiet. Sich an dieses Gebiet anschließende aktive $q_p$-Bereiche bzw. $g_m$-Bereiche werden an dieses Gebiet gelinkt, sofern sie sich im Korrekturbereich befinden. Dies liefert die neue Hypothese für das Fahrzeug.

Alternativ kann man den Gesamtalgorithmus verwenden, um eine neue Fahrzeughypothese zu generieren und sie anschließend mit der Vorhersage zu vergleichen und innerhalb eines Beschleunigungskorrekturbereichs als gleich zu identifizieren.

Der Vorteil der Beschränkung des Linkens auf den Korrekturbereich ist, dass auch Fahrzeuge, die zwischenzeitig teilweise von anderen Fahrzeugen verdeckt werden bzw. diese verdecken, verfolgt werden können, bis die Verdeckung wieder verschwindet.

Für die neue Hypothese wird dann wiederum die Geschwindigkeit ermittelt, die den nächsten Schritt des Verfolgens ermöglicht usw.

Mit alternativen Ansätzen der Detektion wie ecken- oder kantenbasierten Verfahren oder CSC-verwandten Ansätzen kann ebenfalls die jeweils neue Fahrzeughypothese ermittelt werden. Dies hat den Vorteil, dass Objekte ohne Weiteres über einen beliebig langen Stillstand hinaus verfolgt werden können. Das Drahtgittermodell des bei der erstmaligen Detektion erkannten Prototypen, bzw. das Drahtgittereckenmodell, das sich aus den detektierten Ecken ergibt, bzw. ein Teil des Drahtgittereckenmodells bzw. die detektierten Ecken selbst, können bzw. kann an den neuen extrapolierten Ort mit verschiedenen kleinen Ortsabweichungen verschoben werden und die dort neu extrahierten Ecken bzw. Kanten daran angepasst werden. Dies kann beliebig oft wiederholt werden. Das eckenbasierte Verfahren hat den Vorteil, dass nur wenige Punkte verglichen werden müssen, und beim Verfolgen nur einiger der Ecken reduziert sich die Rechenzeit weiter und es wird ein Verfolgen von Objekten möglich, die teilweise verdeckt sind, z.B. PKWs, von denen nur ein Dach und eine Scheibe sichtbar ist.

Für die Verwaltung des Fahrzeugverfolgens können Belief-Netzwerke (gerichtete azyklische Graphen) verwendet werden.

Das Verfolgen von Fahrzeugen über eine Kreuzung kann bei Fahrspuren vermieden werden, die nur für Geradeausfahrer oder nur für Abbieger gekennzeichnet sind, wenn man in den ROIs anfangs Abbiege- und Geradeaus-Fahrspuren kennzeichnet. Viele Spuren sind jedoch sowohl für Abbieger als auch für Geradeausfahrer ausgelegt, so dass dies nicht allgemein verwendet werden kann.

**Wiedererkennung von Fahrzeugen**

Nachfolgend wird die Wiedererkennung von Fahrzeugen an verschiedenen Orten, insbesondere an anderen Kreuzungen im Bildbereich einer anderen Kamera erläutert.

Die Projektionen der 2-d-Flächen der Prototypen auf die 2-d-Pixelebene werden in Form zusätzlicher Vektoren zu denen der Umrandung berücksichtigt. Diese definieren 2-d-Bereiche im Bild bzw. Fahrzeuge. Diese Bereiche werden verkleinert, indem z.B. ca. 20 cm Randbereiche nicht berücksichtigt werden. Bei den Hypothesen an die unteren Hälften der PKW-Seitenflächen wird vorzugsweise nur ein etwa mittiger Bereich verwendet, weil vorne und hinten die Räder und deren Umgebung einen Störeinfluss bewirken. Die Farbmittelwerte dieser Bereiche werden gespeichert, zusammen mit den übrigen Daten der Hypothese des Fahrzeuges, Ortsvektor, Geschwindigkeitsvektor, Prototyp, Längenabmessung, Fahrspur mit Richtung und Straßennamen bzw. Kreuzung sowie Zeitpunkt, gegebenenfalls auch mit Beschleunigungsvektor und mehr.

Die Verkleinerung um z.B. 20 cm bewirkt erstens, dass entsprechende Abweichungen der individuellen Abmessungen der 2-d-Flächen eines Fahrzeuges bis zu etwa diesem Grad nicht ins Gewicht fallen, und dass etwaige Sonnenlichtreflexionen, die manchmal an den Rändern der 2-d-Flächen auftreten, herausfallen.

Für die Farbdatenwerte können zusätzliche Werte zur Erhöhung der Erfolgsrate der Wiedererkennung verwendet werden, wie beispielsweise eine Hypothese bezüglich der Orientierung des Fahrzeugs bzw. der jeweiligen Fläche zur Fahrspur und der Sonnenstand relativ zu der Hypothese an die Orientierung des Fahrzeugs.

Eine sehr einfache Variante zur Berücksichtigung der Beleuchtungsverhältnisse ist die Speicherung der renormierten rg-Farbmittelwerte der 2-d-Flächen, da diese aufgrund der Renormierung weniger stark als z.B. RGB-Werte davon abhängen, ob das Fahrzeug sich in einem Schatten oder in der Sonne befindet. Detaillierteres bzgl. der Gewichtung der einzelnen Flächen wird später beschrieben.

Optional kann man Farbmittelwerte von 2-d-Flächen über die verschiedenen getrackten Bilder eines Fahrzeuges sowie Längenabmessungen mitteln, um die Werte adaptiv zu verbessern, und man kann die zugehörigen empirischen Standardabweichungen ebenfalls speichern.

Mit dem vorgestellten Verfahren können Fahrzeuge an anderen Kreuzungen wiedererkannt werden, indem die Daten der Fahrzeughypothesen verglichen werden, wobei z.B. jeweils durch das Fahrzeug selbst verdeckten 2-d-Flächen die der gegenüberliegenden unverdeckten Seite zugewiesen werden können. Verglichen werden beispielsweise ein Fahrzeugprototyp oder mehrere mögliche Fahrzeugprototypen, die einen ähnlichen hohen Ähnlichkeitswert mit dem Objekt aufweisen, Größenabmessungen, ein Zeitbereich, in dem ein Fahrzeug im jeweils in dem im Straßennetz nächsten überwachten Bereich oder der möglichen nächsten Bereiche erwartet werden kann sowie Farbdaten, wobei die Anzahl berücksichtigter Pixel als Qualitätskriterium des jeweiligen Farbdatenwertes genutzt werden kann etc. Dies kann mit einem einmalig zu trainierenden neuronalen Netz geschehen, jedoch auch durch Festlegung von Kriterien, beispielsweise indem die Größenabmessung und die helligkeitsrenormierten Farbwerte nicht mehr als einen bestimmten Wert abweichen dürfen. Die Schwellenwerte können empirisch optimiert werden.

In Videobildern des Verkehrs zeigt sich im allgemeinen, dass 2-d-Flächen, deren Normalen näherungsweise nach oben zeigen, wie z.B. das Dach des Fahrzeuges, oftmals den Himmel reflektieren, der bei nicht zu starker Bewölkung vergleichsweise hell ist. Dadurch ist die wirkliche Farbe des Fahrzeuges an diesen Flächen weniger gut erkennbar als insbesondere an den Seitenflächen eines Fahrzeuges, weil die Seitenflächen normalerweise das dunkle Grau der Straße reflektieren. Dadurch ergibt sich, dass die Farbmittelwerte der Seitenflächen der Fahrzeuge, bei PKW natürlich nur der untere Teil dieser Flächen, der keine Scheiben enthält, vergleichsweise sehr gut die Farbe des Fahrzeuges kodieren. Daher sind vorzugsweise sichtbare Seitenflächen bzw. bei PKW die untere Hälfte der Seitenflächen, d.h. die Seitenflächen ohne die Scheiben, bei der Wiedererkennung höher zu gewichten.

**Verschiedene Fahrzeug-Wiedererkennungsmethoden**

Für den eigentlichen Wiedererkennungsvorgang sind verschiedene Verfahren möglich, wobei diese jeweils ihre Vor- und Nachteile aufweisen und in Abhängigkeit der Rahmenbedingungen geeignet zu wählen sind.

Eine Möglichkeit dazu ist, die extrahierten Fahrzeugdaten jeweils an eine Zentrale zu senden und dort für alle Kreuzungen der überwachten Region die Wiedererkennung durchzuführen. Dabei ist der Rechenaufwand dadurch verringerbar, dass man nur an den Kreuzungen, wo ein Fahrzeug sich von einer Kreuzung aus startend hinbewegt, und nur in einem sinnvollen Zeitintervall Fahrzeuge miteinander vergleicht.

Eine alternative Möglichkeit ist, die Daten jeweils nur an die benachbarten Kameras zu senden und jeweils on-board auf den Kamerarechnersystemen die Wiedererkennung durchzuführen. Dies erfordert höhere Kosten für die ständige Signalübertragung, hat jedoch den Vorteil, dass bei Ausfall einer Kamera weniger Daten verloren sind als im anderen Fall bei Ausfall des Zentralrechners.

Durch eine on-board-Wiedererkennung lässt sich das Gesamtsystem sehr einfach auf sehr große Regionen und sehr viele Kameras hochskalieren, weil in der Zentrale kein Rechenaufwand für die Wiedererkennung anfällt.

Wenn man die Fahrzeugwiedererkennung on-board durchführt, kann man vorzugsweise an Fahrzeug-Daten erst die Wiedererkennung berechnen und dann gegebenenfalls die Fahrzeug-Daten als wiedererkannt kennzeichnen und erst dann an die benachbarten Kamerarechner versenden. Die Daten des wiedererkannten Fahrzeuges werden dabei weitergesendet in Verbindung mit Zeitpunkt und Ort der Detektion des Fahrzeuges und vorzugsweise Zeitpunkt und Ort, ab dem das Fahrzeug vom Algorithmus der Kamera nicht mehr erfasst wurde. Bei weiteren Wiedererkennungen in anderen Kamerarechnern werden die Routendaten jeweils angehängt.

Real wird die Wiedererkennungsrate im Allgemeinen näherungsweise exponentiell mit der Anzahl der Kreuzungen auf der Route sinken, wobei die Basis der Prozentsatz der an einer Kreuzung wiedererkannten Fahrzeuge ist.

Routen über eine gewisse maximale Länge werden daher im Allgemeinen nicht komplett erfasst. Die maximale Länge steigt mit Erhöhung der Rechenleistung der verwendeten Systeme und entsprechend detaillierteren Daten über die Fahrzeuge.

Man kann die Fahrzeugdaten, deren Wiedererkennung an einer Kreuzung aufhört, mit der Kette der bisherigen Wiedererkennungsorte und Zeitpunkte, d.h. seiner Routeninformationen, an die Zentrale senden, d.h. es müssen nur die endgültigen Routenhypothesen übertragen und in der Zentrale gespeichert werden.

Die vorgestellten Wiedererkennungsverfahren lassen sich in drei Kategorien unterteilen:

1) On-board-Wiedererkennung: Diese Methode ist besonders einfach auf sehr viele Kameras hochskalierbar, denn die Verarbeitung on-board ist maximal auf die Daten der benachbarten Kameras beschränkt, die begrenzt ist, z. B. bei einer Kamera pro Kreuzung auf die im Allgemeinen etwa 4 benachbarten Kreuzungen bzw. Straßen. Die Daten eines Fahrzeuges sind z.B. erst nach Abschluss der Route an die Zentrale zu senden. Diese müssen dort nur verwaltet werden, daher ist hierbei ein besonders niedriger Rechenaufwand pro Kamera in der Zentrale notwendig.

Ferner kann bei einer extremen Hochskalierung auf beispielsweise über 10.000 Kameras in der Zentrale die Arbeit zur Verwaltung und Speicherung der Ergebnisse auf mehrere Rechner verteilt werden, bei denen jeder Rechner Daten von einem Subnetz der überwachten Region empfängt und verwaltet.

2) Wiedererkennung in einer Zentrale ist im Falle einer nicht zu großen Anzahl Kameras, d.h. nicht mehr als der jeweilige Zentralrechner verarbeiten kann, sinnvoll, weil der Rechenaufwand auf den on-board-Rechnern niedriger ist und weil die Kommunikationskosten niedriger sind, da die Fahrzeugdaten nur an die Zentrale übermittelt werden müssen und nicht an benachbarte Kameras.

3) Wiedererkennung in einer Zentrale für eine große Anzahl Kameras: Sofern die Anzahl für einen PC/Rechner zu groß gewählt wird, kann man diese Aufgabe mit mehreren Rechnern, auf denen definierte Subnetze der Stadt bearbeitet werden und nur an den Rändern der Subnetze die Daten zwischen den Rechnern ausgetauscht werden, lösen.

Jede Kamera sendet entweder kontinuierlich oder z.B. alle 10 Minuten die jeweils gesammelten Daten der Fahrzeughypothesen, wobei ein getracktes Fahrzeug nur einmal gesendet wird mit gegebenenfalls Zeitpunkt des Beginns des Trackens sowie Ort, Geschwindigkeit und Fahrspur vor der Kreuzung und Zeitpunkt des Endes des Trackens mit Ort, Geschwindigkeit und Fahrspur u.s.w. zusammen mit den oberen beschriebenen Fahrzeugdaten (Prototyp, Fahrzeugabmessungen, Farbmittelwerte der 2-d-Flächen usw.). Die Daten erhalten vorzugsweise jeweils einen Sicherheits- und/oder Genauigkeitswert, der - wie oben beschrieben - bei der Ermittlung der jeweiligen Daten anfällt. Bei Methode 1 werden die Daten an die benachbarten Kamerarechner gesendet, bei Methode 2 und 3 nur an die Zentrale.

Im Folgenden wird auf die beiden sich wesentlich unterscheidenden Methoden 1 und 2 detaillierter eingegangen.

Bei Methode 2 werden die gesammelten Daten an eine Zentrale gesendet. Dort werden die Daten in geeigneter Weise gespeichert, und es werden jeweils die Daten von Fahrzeugen mit denen der in Frage kommenden benachbarten Kreuzungen zu geeigneten Zeiten verglichen und per Schwellenwert wird gegebenenfalls Übereinstimmung festgestellt.

Den Daten für wiedererkannte Fahrzeuge werden die Daten der Zeitdifferenz und der Kamera, an der die Wiedererkennung stattfand, hinzugegeben, wobei den Datensätzen für die Wiedererkennung grundsätzlich vorab ein zunächst leerer Speicherbereich für die gegebenenfalls entstehenden Routeninformationen hinzugefügt wird.

Die Uhren der Kamerarechner können von einer Zentrale aus synchronisiert werden. Im einfachsten Fall reicht eine etwa sekundengenaue Synchronisierung aus. In Fällen, in denen nah benachbarte Bereiche von verschiedenen Kameras überwacht werden, sind die Uhren dieser Kameras vorzugsweise genauer synchronisiert. Für den üblichen Fall, dass die nächstbenachbarten Bereiche des Straßennetzes, die von je einer Kamera überwacht werden, zwei Bereiche sind, von denen einer vor der Kreuzung und einer dahinter liegt, gilt folgendes: Das Verfolgen von Fahrzeugen kann optional unterbleiben. Dafür kann eine Fahrzeug-Wiedererkennung zwischen diesen beiden Kameras durchgeführt werden. Durch die Wiedererkennung wird es möglich, größere Zeitfehler zwischen den Uhren zuzulassen. Nach erfolgreicher Wiedererkennung kann eine eventuelle auf Asynchronität der Uhren beruhende falsche Zeitreihenfolge nachträglich korrigiert werden. Mittels der ermittelten Geschwindigkeiten der Fahrzeuge und dem Abstand ihrer ROIs kann man zudem einen guten Näherungswert für den korrekten Zeitabstand berechnen und den Fahrzeug-Routendaten hinzufügen. Alternativ kann mit jedem Datenaustausch (oder nur bei einigen oder ganz unabhängig davon) ein Uhrenabgleich erfolgen, wobei vorab den Uhren eine Prioritätenliste zugeordnet wird. Die Zeit der Uhr, die jeweils höher in der Prioritätenliste steht, wird auch auf dem Empfängerrechner eingestellt. Die höchste Priorität erhält vorzugsweise die Uhr in der Zentrale.

Zuzuordnende Zeiten lassen sich weiter verbessern, indem eine Interpolation aus Uhrenabweichungen aus zurückliegenden Synchronisierungen verwendet wird, d.h., wenn eine Uhr bisher z.B. schneller ging als die Uhr der Zentrale, so kann man diesen schnelleren Gang auch für die aktuell zu notierenden Zeitpunkte berücksichtigen.

Wiedererkannte Fahrzeuge und Daten anderer Systeme wie Floating-Car-Daten und Induktionsschleifen ermöglichen die prognostizierte Reisezeit der jeweils nächsten Fahrzeuge sehr gut einzugrenzen, wodurch sich das für eine Wiedererkennung zu untersuchende Zeitfenster weiter eingrenzt, was die nötige Rechenleistung weiter reduziert.

**Hochskalierung auf größere Regionen:**

Bei Methode 1 werden die Daten on-board der Kamerarechner miteinander verglichen. Dabei werden beispielsweise nur beendete Routen an die Zentrale übermittelt. Dafür müssen die Daten von einer Kamera zur Wiedererkennung der Fahrzeuge jeweils an die benachbarten Kameras übertragen werden.

Vorzugsweise übermittelt eine Kamera Daten von je einer wegführenden Straße nur an jeweils die Kamera, die den jeweils nächstliegenden Bereich im weiteren Verlauf dieser Straße erfasst bzw. an die Kameras, welche, falls die Straße sich verzweigt und falls an der Verzweigung keine Daten erfasst werden, hinter dieser Verzweigung die im Straßenverlauf nächstliegenden Gebiete erfassen.

Methode 1 hat den Nachteil der für die zusätzlichen Datenübertragungen zwischen den Kameras anfallenden Kosten im Dauerbetrieb, jedoch den Vorteil der einfacheren Skalierbarkeit auf wesentlich größeren Regionen, weil in der Zentrale keine Fahrzeugvergleichsoperationen ausgeführt werden.

Allgemein gilt für beide Methoden, dass es nach einmaliger Wiedererkennung eines Fahrzeuges auf zwei benachbarten Kreuzungen möglich ist, die Rechenzeit weiter zu verringern, indem die dabei automatisch ermittelte Reisezeit zwischen den Kreuzungen als Mittelwert eines größeren Bereichs von möglichen Reisezeiten der nachfolgenden Autos angenommen werden kann und somit nur in einem relativ kleinen Zeitintervall die entsprechenden Fahrzeuge verglichen werden müssen. Das für das jeweils nächste Fahrzeug erwartete Reisezeitintervall kann anhand weiterer wiedererkannter Fahrzeuge kontinuierlich adaptiv verbessert werden.

Das Ziel ist dabei zunächst nicht, jedes Fahrzeug wiederzuerkennen, sondern einen gewissen Prozentsatz der Wiedererkennung zu erreichen. Damit stehen zusätzlich Routeninformationen, mit denen u.a. eine Verkehrssimulation verbessert werden kann, zur Verfügung. Die gewonnenen Daten können optional mit Floating-Car-Daten und anderen Datenquellen verbunden werden und ihre Genauigkeit kann dadurch weiter erhöht werden. Mit Hilfe einer Computersimulation des Verkehrs können zum Beispiel Prognosen für den Verkehr erstellt werden, Nutzern z.B. über Handy/PDA in Echtzeit individuelle Reisezeitinformationen bereitgestellt werden sowie eine dynamische Ampelsteuerung und Steuerung von Signalanlagen zur Geschwindigkeitsbegrenzung zur Vorbeugung von Staus durchgeführt werden.

**Alternative Verfahren zur Fahrzeugerkennung**

Alternativ-Verfahren 1

Bestimmung eines Rechtecks parallel zur Fahrbahn, in dem sich das Fahrzeug befindet.

Es müssen - wenn das Fahrzeugabbild im wesentlichen komplett im Rechteck liegen soll - vier Parameter optimiert werden (Breite, Höhe und zwei Ortskomponenten). Dies kann sequentiell erfolgen, da Fahrzeuge in den betrachteten ROIs üblicherweise etwa längs der Fahrspur liegen. Unter Annahme eines relativ flachen Blickwinkels werden vorzugsweise zunächst in den oben beschriebenen kleinsten ROIs und deren Verlängerung längs der Fahrspur Objekthypothesen bestimmt. Dieses Vorgehen ist zu bevorzugen, da die kleinsten ROIs so definiert wurden, dass dort praktisch nie partielle Verdeckungen zwischen Fahrzeugen verschiedener Fahrspuren auftreten. Ist der Winkel zwischen der Bildvertikalen und dem Abbild der Straßenrichtungs-Linie klein genug ist, so kommen partielle Verdeckungen zwischen Fahrzeugen verschiedener Fahrspuren auch im an die kleinsten ROIs angrenzenden Bereich kaum vor. Die weiteren Parameter für die Objekthypothese lassen sich damit direkt ermitteln. Bei weniger flachen Blickwinkeln werden vorzugsweise zunächst nur die Längen längs der Fahrspur ermittelt. Eine anschließende Komplettierung der Objekthypothesen quer zur Fahrspur im Bereich, in denen eine solche Fahrzeughypothese erwartet werden kann, erfolgt bevorzugt mit Hilfe des oben beschriebenen Clusterverfahrens. Alternativ lässt sich nach Ermittlung der Längsabmessungen der Objekthypothesen sowie der Geschwindigkeitshypothesen auch ein Matchen der Fahrzeug-Prototypen z.B. mit einem ortsaufgeweichten Kantenbildverfahren (vgl. DE 198 31 413 A1) oder einem Eckendetektionsverfahren durchführen. Dabei kann eventuelles vorhandenes Wissen darüber, dass ein Bereich zu einem bestimmten Fahrzeug gehört, berücksichtigt werden, wenn dieses Fahrzeug in einer der Kamera näheren Fahrspur bereits gefunden wurde. Dieses Wissen kann gegebenenfalls beim Matchen der aktuellen Objekthypothese direkt als solche mit berücksichtigt werden.

Objekthypothesen, die in den kleinsten ROIs und deren Verlängerungen entlang den Fahrspuren detektiert werden, können beispielsweise als ein niedriger Level of Service einem Nutzer zur Verfügung gestellt werden (als Hypothesen für etwa oberhalb der Grenzgeschwindigkeit bewegter Fahrzeuge) in Kombination mit den Daten aus dem 1-d-Fourieransatz.

Für eine Anpassung der Rechtecke werden zunächst in einem Rechteck (z.B. mit einer Breite von 5 m längs der Fahrbahn) längs und quer zur Fahrbahn mittig der Fahrspur das $q_p$-Bild bzw. $g_m$-Bild mit gleichen Gewichten summiert und mit dem Faktor (Durchmesser Kamerabild/Durchmesser Rechteck)$^{\lambda}$, z.B. $\lambda \approx 0{,}7$, multipliziert - dies wird als der I-Wert des Rechtecks bezeichnet. Das Rechteck wird dann längs der Fahrspur über das gesamte ROI in z.B. 50 cm Abständen verschoben. Die Verschiebung ist am wenigsten rechenzeitaufwändig, wenn jeweils nur die ca. 50 cm breiten Differenzrechteckstreifen zu Beginn und zum Ende des zuletzt berechneten Rechtecks berechnet und zum vorherigen Wert entsprechend addiert bzw. davon geeignet subtrahiert werden. Anschließend werden immer größere Rechtecke betrachtet, wobei z.B. 50cm-Streifen an die bereits berechneten angegliedert werden. Die theoretische Begründung des Ansatzes ist in "R. Woesler, Segmentation model: analytical results and biological implications. Biol Cybern, 85, 203-210, 2001" beschrieben.

Das Alternativ-Verfahren 1 kann für sehr langsame Fahrzeuge bei ungünstigem Blickwinkel optimiert werden, indem man zunächst Fahrzeugcluster mit dem weiter oben beschriebenen Clusterverfahren ermittelt und deren innere Bereiche als aktiv definiert. Anschließend können in den kleinsten ROIs, verlängert entlang der Fahrspur, geeignete Aktivitätsbereiche mit dem Rechteckverfahren ermittelt werden. Dadurch stellt man sicher, dass bei sehr langsamen Objekten, bei denen in den kleinsten ROIs die Aktivitätsbereiche von Vorder- und Hinterkante weit entfernt liegen, diese verbunden sind und als zu einem Fahrzeug gehörend erkannt werden.

Für LKW werden zwei bzw. drei der berechneten benachbarten Rechtecke aneinandergefügt und die I-Werte berechnet. Vorläufige Fahrzeughypothesen sind die lokalen Maxima über den beschriebenen 3-d-Scale-Space der I-Werte.

Diese Liste lokaler Maxima wird beginnend mit dem größten I-Wert abgearbeitet, bis ein minimaler I-Wert erreicht ist. Anschließend können die vier Parameter des Rechtecks einer Fahrzeughypothese detaillierter angepasst werden, indem durch Verschiebungen/Skalierungsänderungen die Rechtecke, die einen I-Maximum entsprechen, direkt bzw. optional iterativ bestimmt werden, mit Hilfe einer räumlich beschränkten, quadratische Interpolation ermittelter I-Werte bis ein Schwellenwert der Genauigkeit unterschritten ist - im seltenen Fall, dass die quadratische Interpolation keinen Wert im beschränkten Bereich ergibt, wird ein Gradientenaufstieg mit binärer Suche durchgeführt.

Optional kann statt der beschriebenen sequentiellen eindimensionalen Anpassung eine mehrdimensionale Anpassung mit Hilfe der mehrdimensionalen quadratischen Optimierung durchgeführt werden.

Optional kann eine weitere Anpassung für höhere Genauigkeit erfolgen bzgl. der Orientierung eines Fahrzeugs zur Fahrspur, die jedoch wie gesagt i. allg. nicht nötig sein wird, weil Fahrzeuge in den betrachteten ROIs üblich längs der Fahrbahn orientiert sind.

Die Rechtecksgebiete, die über das ROI verschoben werden, können vorab gespeichert werden, d.h. sie brauchen nicht in Echtzeit bestimmt werden.

Alternativ-Verfahren 2

Eine weitere Alternative ist eine beschleunigte Fassung einer sogenannten Scale-Space-Synchronisation, die nicht speziell auf Fahrzeuge abgestimmt ist.

Die lokalen Maxima der untersten Ebene des Scale-Space werden gespeichert und zwar die Maxima in der Ebene konstanter rezeptiver Felder, d.h. nicht die lokalen Maxima des 3-d-Scale-Space. Im Gegensatz zum Alternativ-Verfahren 1 entsprechen die lokalen Maxima nun z.B. rezeptiven Feldern mit 50 cm Durchmessern (vgl. R. Woesler, Segmentation model: analytical results and biological implications. Biol Cybern, 85, 203-210, 2001). In der Umgebung dieser lokalen Maxima, und nur dort, werden dann die Werte I berechnet für je vier rezeptive Felder mit nächstgrößerem Durchmesser (Skalierungsfaktor der Durchmesser z.B. s=1,3), deren Zentren entweder einem Gitter entnommen sind, oder jeweils benachbart in gleicher Distanz zum Zentrum des zugehörigen lokalen Maximums der niedrigeren Ebene berechnet werden. Der größte dieser vier I-Werte wird in einer Liste gespeichert.

Alternativ können auch mehr Felder berechnet werden sowie das größte lokale Maximum der I-Werte dieser Felder, wiederum in der jeweiligen Ebene und nicht im 3-d-Scale-Space. Anschließend werden nur diese lokalen Maxima gespeichert.

Dies wird für alle lokalen Maxima der untersten Ebene des Scale-Space durchgeführt. Iterativ wird anschließend dies hin zu wiederum größeren rezeptiven Feldern fortgeführt usw. Dabei werden zudem lokale Maxima bzgl. der Scale-Space-Richtung markiert. Solche sind Kandidaten für sogenannte Root-Neuronen, deren Feldgrößen erste grobe Objektgrößenhypothesen darstellen.

Die Verbindung lokaler Maxima über die Ebenen hinweg stellt einen Baum im Scale-Space dar. Der Vorteil der Berechnung des Baumes gegenüber der Berechnung des ‚vollen' Scale-Space ist die verringerte Rechenzeit, weil nur noch die wichtigsten Punkte berechnet werden - dies sind genau die Bäume. Die Synchronisation der Neuronen im Scale-Space entspricht der Speicherung der Bäume. Auch das in diesen Bäumen im Scale-Space auftauchende globale Maximum ist gesondert zu speichern. Es ist erster Kandidat für eine Fahrzeughypothese. Dies ist für jeden der Bäume, die in der untersten Ebene beginnen bis zu einem unteren Schwellenwert für den I-Wert, durchzuführen.

Die ersten Fahrzeughypothesen werden wie folgt ermittelt. Die Maximaliste kann abgearbeitet werden wie die Maximaliste im ursprünglichen Scale-Space. Kriterien für Fahrzeughypothesen sind die Absolutgröße der Felder, die z.B. rechteckig längs der Fahrspur gewählt sein können, und dass der I-Wert einen minimalen Betrag überschreiten muss, den man für ein hypothetisches quadratisches 'Fahrzeug' minimaler Größe errechnet, dass sich so langsam bewegt, so dass es während $\tau$ nur den Bereich eines $q_p$ überschreitet.

Genauere Fahrzeugumrandungen können wie folgt bestimmt werden. Der Baum durch die Ebenen bis zu einem lokalen Maximum im 3-d-Scale-Space wird, während er berechnet wird, gespeichert und anschließend kann man die Felder der untersten Ebene eines Baumes genauer betrachten. Die aktiven $q_p$ (bzw. $g_m$), die sich in diesen Feldern (z.B. sigma-Umgebung) befinden, und der Bereich von $q_p$-Pixel (bzw. von Bereichen m), deren Aktivität eins ist, und die direkt verbunden sind mit den Aktiven im Feld über jeweils aktive Nachbarn, werden zusammen gespeichert. Hieraus kann die grobe Umrandung des Bewegungsbildes der Fahrzeughypothese ermittelt werden. Diese kann wiederum mit den aus den Prototypen erzeugten Bewegungsbildern verglichen werden zur Prototypklassifizierung. Das weitere Vorgehen ist analog wie bei den anderen Methoden beschrieben.

Alternativ-Verfahren 3

Eine weitere Alternative ist eine Scale-Space-Synchronisation, die speziell auf Fahrzeuge abgestimmt ist.

Durch die spezielle Abstimmung auf Fahrzeuge ist dieses Alternativ-Verfahren schneller als das Alternativ-Verfahren 2. Vorder- und Hinterkanten von Fahrzeugen sind die kleinsten bei der Fahrzeugdetektion relevanten Objektteile speziell bei der Fahrzeugerkennung tags anhand der Bewegungsbilder, weil sie im Bewegungsbild i. allg. am deutlichsten sichtbar sind. Entsprechend geformte Polygone (im einfachsten Falle Rechtecke für Vorder- bzw. Hinterkante) ersetzen nun die unterste Ebene des Scale-Space. Wiederum werden die lokalen Maxima bestimmt.

Wie bei Alternativ-Verfahren 2 können genauer als die Gitterkonstante $d_k$ (siehe R. Woesler, Segmentation model: analytical results and biological implications. Biol Cybem 85, 203-210, 2001) der Polygone matchende Felder bestimmt werden unter Verwendung der ein- oder mehrdimensionalen, räumlich beschränkten, quadratischen Interpolation zur Maximierung des I-Wertes.

Die nächsthöhere Ebene stellt bereits die PKW- bzw. gegebenenfalls Motorrad-Ebene dar. Die rezeptiven Felder fassen Fahrzeugvorder- und Fahrzeughinterkantenhypothesen zusammen. LKWs sind auf der wiederum nächsthöheren Ebene als rezeptive Felder, welche auch aus der Berechnung der $q_p$-Bilder der Fahrzeugprototypen generiert werden können, zu finden - dies alles sind Schritte, die einmalig durchgeführt werden und gespeichert werden, so dass sie die Geschwindigkeit der Algorithmen, die kontinuierlich durchgeführt werden müssen, nicht belasten.

Optional anstelle der $q_p$-Funktion kann auch die $g_m$-Funktion verwendet werden - in dem Falle wäre die Rechenzeit weiter verringert, weil es wesentlich weniger Bereiche (m) als $q_p$-Pixel gibt.

Alternativ-Verfahren 4

In einem weiteren Alternativ-Verfahren wird ein ortsaufgeweichtes Kantenbild bzw. Eckenbild zum Matchen mit den Kanten bzw. Ecken des Prototyps verwendet.

Das Alternativ-Verfahren 4 kann in den ROIs ohne Vorab-Bewegungsanalyse oder in den Bereichen, die zuvor durch die Bewegungsanalyse ermittelt wurden, stattfinden, was beides eine Rechenzeiteinsparung gegenüber einer Suche im gesamten Verkehrsraum des Bildes darstellt. Das Kantenbild kann z.B. im RGB-Farbraum und/oder im rgb-Farbraum oder einem anderen geeigneten Raum berechnet werden. Die Kantenbildberechnung kann optional über den gesamten Bereich im Farbbild durchgeführt werden, welcher einem Rechteck längs und quer zur Fahrbahn um die ermittelte Fahrzeug-Hypothese entspricht.

Die Kantenbildberechnung erfolgt im einfachen Falle z.B. durch Bildung der Summe der Beträge der Differenzen der Farbwerte vom jeweils aktuellen Rasterpunkt mit den benachbarten Rasterpunkten rechts und oben, optional zusätzlich mit den rechts oben und rechts unten, und Summation über die Werte unter Berücksichtigung eines Schwellenwertes der Gesamtsumme für aktiv/inaktiv (=Kante/keine Kante).

Der Fall, dass nur die Rasterpunkte oben und rechts verwendet werden, führt z.B. auf folgende Formel für die Indikatorfunktion $K_p$ der Kantendetektion für einen Rasterpunkt p

$$K_{p,RGB} = H(|R_p-R_{p(oben)}| + |G_p-G_{p(oben)}| + |B_p-B_{p(oben)}| + |R_p-R_{p(rechts)}| + |G_p-G_{p(rechts)}| + |B_p-B_{p(rechts)}| - \theta_4)$$

bzw.

$$K_{p,rgb} = H(|r_p-r_{p(oben)}| + |g_p-g_{p(oben)}| + |b_p-b_{p(oben)}| + |r_p-r_{p(rechts)}| + |g_p- g_{p(rechts)}| + |b_p-b_{p(rechts)}|-\theta_5).$$

Hierbei ist 'p(rechts)' der Index des Rasterpunktes rechts vom Rasterpunkt p und 'p(oben)' der Index des Rasterpunktes über dem Rasterpunkt p.

Bei der Verwendung von rgb ist grundsätzlich zu beachten, dass dies bei niedriger Helligkeit, d.h. R+G+B klein, unter einem minimalen Schwellenwert, z.B. nachts, keine sinnvollen Kanten mehr liefert. Dem kann z.B. durch Umschalten auf eine bestimmte RGB-Formel für solche RGB-Werte begegnet werden.

Sinnvoll ist die Detektion von Farbkontrastkanten auch ohne Helligkeitskontrast. Dies wird z.B. durch die rgb-Terme ermöglicht. Zusätzlich ist für nichtfarbige Fahrzeug sinnvoll, einen Helligkeitsterm zu verwenden, z.B.

$$K_{p,rgb,kGB} = H(|r_p-r_{p(oben)}| + |g_p-g_{p(oben)}| + |b_p-b_{p(oben)}| + |r_p-r_{p(rechts)}| + |g_p-g_{p(rechts)}| + |b_p-b_{p(rech.)}| + \theta_6|R_p+G_p+B_p-[R_{p(oben)}+G_{p(oben)}+B_{p(oben)}]| + \theta_6 |R_p+G_p+B_p-[R_{p(rechts)}+G_{p(rechts)}+B_{p(rechts)}]|-\theta_7).$$

Optional kann bei der Kantendetektion entweder lokal begrenzt nach lokalen Maxima der Kontraständerungen in Richtung stärkster Änderung des Kontrasts gesucht werden, und/oder es kann bei der Eckendetektion bei mehreren detektierten ähnlichen Ecken auf benachbarten Rasterpunkten ein mittlerer als der Eckpunkt definiert werden.

Die Schwellenwerte können von der globalen und lokalen Helligkeit abhängen, und unterschreiten einen vorgegebenen Wert nie, mit dem Ziel, zu verhindern, dass zu viel Rauschen als Kante detektiert wird. Wenn die Gesamthelligkeit zu klein ist, kann, wie später beschrieben, von der Kantendetektion auf eine Fahrzeug-Lichterdetektion umgeschaltet werden. Bei niedriger Gesamthelligkeit z.B. nachts kann bei Vorhandensein einer IR-Kamera auf diese umgeschaltet werden, wobei ein Term der Art

$$K_{p,IR} = H(|IR_p-IR_{p(oben)}| + |IR_p-IR_{p(rechts)}| - \theta_8)$$

verwendet werden kann.

Dabei stellt $\theta_i$ jeweils ein geeignetes, gegebenenfalls empirisch und/oder adaptiv angepasstes Korrekturglied dar.

Weiteres Rechenzeiteinsparpotenzial liegt in der Beschränkung auf ein Grauwertbild, oder z.B. den Kanal mittlerer Frequenz, d.h. des Grünkanals eines Farbbildes.

Das extrahierte Kanten- bzw. Eckenbild wird vorzugsweise ortsaufgeweicht.

Die Rechenzeit zum Matchen kann verringert werden, wenn bei Fahrzeugen, bei denen im Bild das hintere Ende sichtbar ist, d.h. bei Fahrzeugen, die sich etwa von unten nach oben durch das Bild bewegen - das sind im Allgemeinen etwa die Hälfte der Fahrzeuge - , verschiedene Hecktypen nicht komplett gematcht werden, sondern z.B. nur die Teile, die von einem bereits gematchten abweichen. D.h., bei PKW wäre sinnvoll, zunächst einen PKW-Prototypen mit Schrägheck zu matchen, dann nur die Abweichungen des Matches im Heckbereich für die verschiedenen Hecktypen (Steilheck/Stufenheck) zu berechnen, weil die übrigen Teile des Fahrzeug-Prototypen unverändert bleiben. Analoges gilt für den Frontteil eines Fahrzeugs, bei dem im Bild die Vorderkante sichtbar ist.

Optional kann hierbei eine weitere Schattenanalyse durchgeführt werden, indem Prototypen mit und ohne Schatten gemäß der 4-Schattenanalyse im Kantenbild und/oder Eckenbild gematcht werden.

Im Folgenden ist eine bevorzugte Ausführungsform bei Rechenzeitbeschränkungen beschrieben.

Es kann ein Eckenbild, ein ortsaufgeweichtes Eckenbild und/oder ein mit vergröberter Auflösung erstelltes Eckenbild verwendet werden, wobei zu dem Eckenbild optional zusätzlich Richtungsvektoren der Kanten, zum Matchen mit den Eckpunkten, und/oder Richtungsvektoren der Kanten, der Prototypen ermittelt werden. Von den z.B. in den ROIs detektierten Ecken kann pro Eckentyp der beste Match als Fahrzeug-Eckenhypothese verwendet werden. Das Matchen eines Eckenbild-Fahrzeug-Prototypen ist ein null-dimensionales Matchen: Pro Fahrzeug sind nur wenige Eckvektoren, optional mit Richtungsvektoren der zugehörigen Kanten, zu vergleichen mit einem realen ortsaufgeweichten Eckenbild, was einen geringen Rechenzeitaufwand für den gesamten Matchvorgang bedingt. Dies stellt einen deutlichen Vorteil gegenüber den beispielsweise aus der DE 198 31 413 A1 bekannten Verfahren dar.

Des Weiteren wird gemäß dem Alternativ-Verfahren 4 sequentiell von einer Ecke aus die nächste gesucht. Die Suche erfolgt dabei in einem Bereich, in welchem die Ecke gemäß Wissen über die Prototypeneckvektoren zu erwarten ist. Dadurch ist der Rechenaufwand weiter reduzierbar,

In einer Ausführungsform wird zunächst eine grobe Ortsauflösung verwendet und anschließend im Bereich des besten Matches einer Ecke der genaue Ort der Ecke mit feinerer Ortsauflösung ermittelt.

Vor Ermittlung eines Eckenbildes kann wie oben beschrieben zuvor eine Skalierung des Bildbereichs durchgeführt werden, so dass ein Rasterpunkt maximal etwa einem Kamerapixel entspricht, um die Rechenzeit zu verringern.

Ecken der Prototypen, insbesondere die vorderen und hinteren Ecken und/oder anhand realer Fahrzeugbilder extrahierte Ecken werden vorab einmalig für die Prototypen nach Projektion in die ROIs gespeichert bei Annahme etwa parallel zur Fahrbahn ausgerichteter Fahrzeuge, und dann werden deren Kantenbilder zur Detektion verwendet. Beispielsweise verläuft die hintere Kante von Klein-PKW bei einigen PKW kaum gekrümmt bis etwa zum Hinterreifen. In derartigen Fällen ist eine Detektion einer vertikalen Kante mit kurzem nach vorn gekrümmten Ende durchführbar. Bei der Eckendetektion kann ein nicht-helligkeitsrenormiertes Bild, z.B. das RGB-Bild, verwendet werden, da im Allgemeinen nicht bzw. maximal nur wenige mit Fahrzeug-Ecken verwechselbare Ecken in Schatten auftreten. Dies hat den Vorteil, dass auch nichtfarbige Fahrzeuge gut erkannt werden, was beim rgb-Verfahren weniger gut funktioniert. Im einfachsten Falle kann der Prototyp einer Ecke im 0,1m-Raster in einem z.B. 5x5 Rasterpunkte umfassenden Gebiet erzeugt werden und davon -wie oben beschrieben- das binarisierte Kantenbild mit einem Schwellenwert berechnet werden. Alternativ ist es auch denkbar, Ecken durch eine Linienendendetektion zu finden. In einer weiteren Ausführungsform wird beispielsweise bei einer Ecke, bei der sich ein Rad anschließt, eine Eckendetektion wieder in einem 5x5 Rasterpunkte umfassenden Gebiet, jedoch mit niedrigerer Auflösung, z.B. zu jedem Quadrat vierer Rasterpunkte ein Eckpunkt, verwendet. Dadurch wird ein Teil der oft markanten Unterkante des Fahrzeugs bei der Eckendetektion berücksichtigt ohne nennenswerte Erhöhung des Rechenaufwandes. In einer anderen Ausführung können zur Detektion bestimmter Ecken in verschiedenen Richtungen verschiedene Auflösungen verwendet werden. Alternativ können z.B. auch runde Dachformen in einem solchen 5x5 Raster niedriger Auflösung detektiert werden.

Mögliche Fehlerquellen können die Ecken von breiten Streifen auf der Fahrbahn sein, z.B. Fahrzeug-Haltelinien. Diese werden vorzugsweise vorab im Bild gekennzeichnet. In einem Bereich, der einem üblichen maximalen Wackeln der Kamera bei Sturm entspricht, kann somit eine Detektion der speziellen hiermit verwechselbaren Ecken von Prototypen unterbleiben. Alternativ oder kumulativ kann die Eckendetektion auf Ecken beschränkt werden, auf die mindestens zwei Kanten zulaufen, deren Längen deutlich die übliche Breite von Fahrbahnstreifen übersteigen. Optional kann zudem vorab eine Wackelkorrektur des Bildes durchgeführt werden (siehe unten Herausrechnen von Wackeln'), wodurch der relevante Bereich verkleinert wird.

Das Eckendetektionsverfahren ist sehr geeignet für neue Asphaltstraßen. Für Kopfsteinpflaster und/oder für Straßen mit vielen starken Beschädigungen oder kontraststarken Bereichen kann das Verfahren adaptiert werden, z.B. indem anfangs bzw. in gewissen Zeitabständen Ecken, die lange etwa unverändert bleiben, als Hintergrund erkannt werden und nur davon abweichende Ecken als Hypothesen für Ecken verwendet werden.

Weiter kann dem Eckendetektionsverfahren eine Vorverarbeitung zur Hintergrundbildsubtraktion vorgeschaltet werden und/oder es kann in Verbindung mit anderen Methoden (CSC etc.) eingesetzt werden.

Die Detektion einer Ecke wird durch Matchen des Eckenprototyps, optional ortsaufgeweicht und bzgl. z.B. einer Kante richtungsaufgeweicht mit dem oben beschriebenen Kantenbild der realen Szene und unter Verwendung eines Schwellenwertes zur Detektion/Nichtdetektion vollzogen.

Detektierte Ecken liefern zudem Informationen über die Abmessungen der detektierten Teile des Fahrzeugs. Diese können gespeichert werden und optional später beim Matchen mit Prototypen, beim Verfolgen des Fahrzeugs und bei einer Wiedererkennung verwendet werden.

Eine Detektion von Fahrzeugen erfolgt vorzugsweise im Bild von unten nach oben, d.h. zunächst an der zur Kamera nächstgelegenen Fahrspur. In dieser Fahrspur gefundene Fahrzeuge können im Bildbereich der darüber liegenden Fahrspur als bereits belegt gekennzeichnet werden. In der nächsten Fahrspur wird bei dichtem Verkehr in der ersten Spur ein großer Teil belegt sein. Die Suche nach Ecken in den höheren Spuren ist daher vorzugsweise eine Suche nach Scheibenecken oder Dachecken.

In einer weiteren Ausführungsform wird eine Hierarchie von Ecken, die der Reihe nach gesucht werden, definiert. Die Hierarchie kann beispielsweise in Abhängigkeit vom Sonnenstand gewählt werden: Eine Ecke die gemäß dem Sonnenstand im Schatten des Fahrzeugs liegt, weist weniger Kontrast auf und ist daher ungünstiger als eine Ecke, die nicht im Schatten des Fahrzeugs liegt - letztere kann dann in der Hierarchie an einer höheren Stelle stehen. Des Weiteren kann bei Verwendung nicht-helligkeitsrenormierter Farbräume zur Hierarchie der Ecken beginnend mit der in der Hierarchie obersten vorab einmalig ermittelt werden, ob es einen Sonnenstand gibt, bei dem eine Schattenecke im Bereich, in dem die jeweilige Fahrzeug-Ecke gesucht wird, mit selben Winkeln der darauf zulaufenden Kanten vorkommen kann. Letzteres wird nicht oder nur selten der Fall sein, insbesondere bei Ecken, auf die mehr als 2 Kanten zulaufen. Sollte es jedoch Auftreten, so ist die Hierarchie der Ecken zu ändern. D.h., Schattenecken werden nur sehr selten stören und bei Beachtung dieser einmaligen Vorabberechnungen praktisch nie stören bei der Fahrzeug-Eckenbestimmung.

Wenn z.B. eine hintere untere Ecke eines im Bild z.B. von oben nach unten fahrenden Fahrzeug gefunden wurde und eine dazugehörige vordere untere Ecke nicht im Bereich, wo sie bei PKW zu erwarten wäre, gefunden wird, kann dies an einer Verdeckung durch ein sich davor befindendes Fahrzeug liegen. Es gibt dann die Möglichkeit, nach der in der Hierarchie nächsten Ecke z.B. nach einer Ecke einer Scheibe zu suchen.

Weiter kann in dem relevanten Bereich nach einer speziellen Ecke gesucht werden, bei welcher eine Unterkante des Fahrzeugs auf die Hinterkante des das Fahrzeug teilweise verdeckenden Fahrzeugs trifft, d.h. einer Ecke mit drei auf diese zulaufenden Kanten in näherungsweise vorgegebenen Winkeln. Eine Detektion einer solchen Ecke kann dann als Hinterkante eines davor fahrenden Fahrzeugs definiert werden und zugleich liefert dies eine Hypothese über den groben Ort der verdeckten Ecke. Diese Informationen können bei der Suche nach weiteren Ecken des Fahrzeugs verwendet werden.

In bereits belegten Bereichen wird dabei nicht mehr gesucht, so dass weiter Rechenzeit eingespart werden kann. Wenn z.B. eine Dachhypothese gefunden ist sowie, der Bereich, in dem vordere und hintere Ecke des Fahrzeug als belegt gekennzeichnet wurden, so wird die Dach- oder Scheibenhypothese als detektiertes Fahrzeug gespeichert. Somit lässt sich eine grobe Verkehrserfassung bei dichtem Verkehr und/oder ungünstigem Kamerablickwinkel in den höheren Spuren durchführen. Durch eine Verfolgung des Fahrzeugteiles ist zudem eine Geschwindigkeitsschätzung des Fahrzeugs möglich. Falls später in dem Bereich, in dem vordere und hintere Ecke des Fahrzeugs erwartet werden können, als nicht belegt gekennzeichnet sind, ist auch die Bestimmung einer Hypothese für die Bodenlänge, Prototyp etc. möglich.

Vorzugsweise werden in einem FPGA eine möglichst hohe Anzahl relevanter Eckdatentypen detektiert, um dadurch den Rechenzeitbedarf des Hauptprozessors zu verringern.

Alternativ-Verfahren 5

Ein weiteres Alternativ-Verfahren ist eine Variante einer der beschriebenen Alternativ-Verfahren, wobei jedoch das Fahrzeugprototypmatchen mit einem neuronalen Netz durchgeführt wird. Das neuronale Netz kann beispielsweise vorab einmalig trainiert werden. Beschleunigen lässt sich dieser Ansatz, wenn man das Netz parallel, z.B. auf FPGA, implementiert.

**Verdeckungen von Fahrzeugen untereinander**

Verdeckungen von Fahrzeugen treten um so öfter auf, je flacher der Kamerablickwinkel ist. Durch einen Kamerablickwinkel nahe genug an der Senkrechten können sie vollständig vermieden werden.

Verdeckungen besitzen immer eine definierte Reihenfolge: Es gibt im Allgemeinen ein nicht von anderen Fahrzeugen verdecktes Fahrzeug, dahinter können weitere jeweils in definierter Reihenfolge teilverdeckte Fahrzeuge folgen. Vereinfacht ausgedrückt können Verdeckungen durch Fahrzeuge im Bild nur von unten nach oben vorkommen.

Hinter einem Fußgängerüberweg kann ein Fahrzeug auch teilweise von Fußgängern verdeckt werden. Speziell im bewegungsbasierten Ansatz wird daher vorzugsweise ein Bereich mit einer Höhe von ca. 1,8m am zur Fahrspur gelegenen Rand des Fußgängerüberwegs in den kleinsten ROIs ausgespart. Wenn Fahrzeuge vor einem Fußgängerüberweg wieder anfahren, werden im Regelfall keine Fußgänger auf dem Überweg sein, und die Fahrzeugerkennung kann zu dem Zeitpunkt ohne Verdeckung fortgesetzt werden.

Es ist alternativ möglich, dass der Bildverarbeitung ein momentaner Status einer Ampel mitgeteilt wird, und/oder dass Fußgänger, deren Bewegungsrichtung dort überwiegend quer zur Fahrbahn ist, anhand der Geschwindigkeitsrichtung als solche (hypothesenmäßig) erkannt werden.

Für ein Auffinden von Fahrzeugclustern sind verschiedene Methoden denkbar. Fahrzeughypothesenbereiche, deren quer-zur-Fahrbahn-Breite einen Schwellenwert überschreiten, insbesondere bei zugleich schlechtem Match mit den vorhandenen Prototypen, können als Hypothesen für eine Fahrzeugkette definiert werden. Zwei Fahrzeuge, die sich auf benachbarten Spuren teilweise verdecken, können direkt als solche klassifiziert werden, wenn sie eine größere quer-zur-Fahrbahn-Breite als Längszur-Fahrbahn-Breite aufweisen. Bei mehr als zwei Fahrspuren lassen sich ähnliche Klassifikationen vornehmen, insbesondere steht mithilfe des bekannten Blickwinkels der Kamera und der Referenzgrößen das Kriterium zur Verfügung, wie viele Spuren eine Fahrzeugkette überdeckt.

In der längs-zur-Fahrbahn-Richtung sind in ähnlicher Weise Fahrzeugketten klassifizierbar als bestimmte Anzahl Fahrzeuge, wobei die Anzahl grob aus der längs-zur-Fahrbahn-Länge abgeschätzt wird.

Aus den näherungsweise extrahierbaren Positionsdaten von Vorder- und Hinterkanten eines Clusters in zwei Bewegungsbildern kann Geschwindigkeitsinformation für den Cluster extrahiert werden. Die Geschwindigkeitsinformation kann getrennt für verschiedene Fahrspuren bestimmt werden, indem die Vorder- und/oder Hinterkanten einzeln in den Bereichen der jeweiligen Fahrspur betrachtet werden.

Bei Überlappungen über entgegengesetzte Fahrtrichtungen hinweg, die üblich seltener sind, weil die Fahrzeuge hier mehr Sicherheitsabstand benötigen, kann dies anhand der vom Cluster überdeckten Fahrspuren detektiert werden.

In einem genaueren Schritt können zusätzlich bewegungsrichtungsabhängige Bilder berechnet und verwendet werden, um derartige Fahrzeugketten zu trennen.

Weitere komplexere Algorithmen sind mit den oben erwähnten Alternativ-Verfahren zur Fahrzeughypothesengenerierung möglich. Durch die Verwendung von komplexeren rezeptiven Feldern, die z.B. Fahrzeugprototypen-Ecken- bzw. Kantenbildern entsprechen können, treten im I-Werteraum auch bei nicht zu stark überlappenden Fahrzeugen bei den einzelnen Fahrzeugen lokale Maxima auf, die detektiert werden können.

Wenn mit obigen Verfahren Fahrzeuge einer Fahrzeugkette gematcht werden, welche zwar andere Fahrzeuge teilweise verdecken, jedoch selbst komplett sichtbar sind, so sind dort wie bei einzeln stehenden Fahrzeugen Farbmittelwerte ermittelbar und es kann eine Wiedererkennung durchgeführt werden.

Ein im Wesentlichen unverdecktes Fahrzeug einer Fahrzeugkette ist wie beschrieben praktisch immer dasjenige, welches am nächsten an der Kamera ist. Dies kann bei matchenden Fahrzeugen einer Kette jeweils überprüft werden, um zu entscheiden, ob es sich um ein unverdecktes Fahrzeug handelt, bei dem die Wiedererkennung ohne weiteres durchgeführt werden kann.

Von weiteren matchenden Fahrzeugteilen einer Fahrzeugkette kann der Teil herausgeschnitten werden, der dem unverdeckten Fahrzeug entspricht. Weitere matchende Fahrzeugteile können analysiert werden unter geeigneter Berücksichtigung des verdeckten Bereichs. Ab einem gewissen Grad von Verdeckung ist eine Wiedererkennung von Fahrzeugen zu unsicher und kann dann unterlassen werden.

Wenn ein zeitweise verdecktes Fahrzeug zu einem Zeitpunkt beim Verfolgen eines Clusters unverdeckt als Einzelfahrzeug detektiert wird, kann es auf späteren Kreuzungen wiedererkannt werden.

**Schlechte Witterungsverhältnisse**

Ein weiteres Problem stellen schlechte Witterungsverhältnisse, wie beispielsweise Wind, Platzregen, Hagel, starker Schneefall und/oder Nebel dar.

**Wind: Herausrechnen von Wackeln**

Im Falle einer Anbringung einer Kamera nicht an einem Haus sondern an einem Masten, der bei Wind und Sturm wackelt, ist zu prüfen, ob das Wackeln innerhalb der vergrößerten ROIs innerhalb $\tau$ zu einer Verschiebung führt, die im oben beschriebenen Differenzbild (Formeln für f und g) auf der etwa 0,1 m-Skala zu Aktivierungen durch stationäre Nicht-Verkehrsobjekte führt. Wenn dies nicht der Fall ist, kann ein bewegungsbasiertes Verfahren direkt eingesetzt werden. Andernfalls kann einerseits auf eine der beschriebenen nicht-bewegungsbasierten Alternativen zur Fahrzeug-Erkennung in den ROIs und Fahrzeugverfolgung zurückgegriffen werden, andererseits kann eine On-line-Korrektur des Wackelns durchgeführt werden. In einer einfachen Lösungsmöglichkeit wird das Vorhandensein von starkem Wackeln detektiert und gegebenenfalls auf einen gröberen Level of Service (siehe oben z.B. mit 1-d-Fourieranalyse) umgeschalten.

Bei Verwendung des oben beschriebenen bewegungsbasierten Konzepts kann folgendes detailliertere Konzept verwendet werden.

Für ein Herausrechnen des Wackelns werden Anforderungen an die Anbringung einer Kamera an einem Mast gestellt. Für eine optimale Anbringung wird beispielsweise gefordert, dass mindestens ein Objekt oder Teilobjekt, dessen Abbild am Tage ausreichend kontrast- oder farb-strukturiert ist, mindestens etwa (0,2m)x(0,2m), maximal etwa (2m)x(2m) umfasst, nie oder möglichst selten verdeckt ist und auch bei Sturm möglichst nur vernachlässigbaren Schwankungen ausgesetzt ist, sich im Bild möglichst nahe an den ROIs befinden sollte. Optimal hierzu ist mindestens ein Verkehrsschild und/oder für jede überwachte Straße ein Schild an einem Mast. Der Mast sollte dabei weit höher sein (über 6m), als eine Befestigungsstelle der Schilder. Wenn man nur ein etwa entlang einer Richtung strukturiertes, etwa gerades Objekt verwenden würde, wäre ein zweites derartiges Objekt mit einer zur Richtung des ersten optimalerweise etwa orthogonalen Richtung sinnvoller Weise zu verwenden.

Der erste Näherungsansatz zum Herausrechnen des Wackelns ist eine lokale Translation des Bildes und/oder des Bildes im jeweiligen ROI gemäß dem 2-d-Translationsvektor des Abbildes des Schildmittelpunktes und/oder eines anderen markanten Punktes gegenüber einem Referenzbild.

Für die Ermittlung der Hypothese an einen 2-d-Translationsvektor des Abbildes einer geeignet definierten Bildregion, beispielsweise ein Schild, kann im einfachsten Falle ein geeignet binarisiertes Kantenbild dieser Bildregion verwendet werden.

Eine Möglichkeit für eine Binarisierung ist, einen Schwellenwert für Bitwert null oder eins so zu wählen, dass die Anzahl aktiver Bits im Bereich nur maximal einen bestimmten Wert abweicht von derjenigen in einem Referenzbild. Wenn die Helligkeit einen Schwellenwert unterschreitet (z.B. nachts) und sofern der Match einen Qualitätsschwellenwert unterschreitet, kann auf einen entsprechend gröberen Level-of-Service umgeschaltet werden.

Bei nicht-bewegungsbasierten Ansätzen kann ohne obige Wackelkorrektur in entfernten Gebieten, wo bei Sturm eventuell bis in den 1m-Bereich der Fahrbahnbereich im Bild wackeln kann, dieses Wackeln im Verfahren näherungsweise berücksichtigt werden. Es kann nach der Fahrzeug-Detektion verfolgt werden, wie sich die detektierten Fahrzeuge über Bilder eines Zeitbereichs von etwa 1s verschieben und dies näherungsweise korrigiert werden, indem die mittlere detektierte Geschwindigkeit als Geschwindigkeit des Fahrzeug definiert wird und die Abweichungen innerhalb dieses Zeitbereichs von dieser mittleren Geschwindigkeit als die durch Wackeln induzierten Abweichungen definiert.

Vermeidung von Problemen durch Vögel: Das Landen und Abheben von Vögeln auf einer Kamera, welches Wackeln, höheren Wartungsaufwand und eventuell Verschieben und Verdrehen der Bildachsen bewirken kann, kann z.B. durch einen entsprechend spitz zulaufenden oberen Teil des Kameragehäuses vermieden werden.

**Nebel und Niederschlag**

In den Fällen Platzregen, Hagel und starker Schneefall ist zu erwarten, dass im Bewegungsbild die Ränder der Fahrzeuge ‚ausfransen' und sich vergrößern, bis im Extremfalle alle Fahrzeuge oder die gesamte ROI als Hypothese generiert werden. Üblicherweise würde im bewegungsbasierten Ansatz zuerst ein Zusammenlinken zweier benachbarter PKW vorkommen. Dies ergäbe eine Objekthypothese, deren Längs- zu Querbreitenverhältnis und die absolute Querbreite die erforderliche Genauigkeit beim Matchen bei keinem der Prototypen unterschreiten wird. Erfindungsgemäß kann dies erkannt werden und mit geeigneten Maßnahmen behandelt werden. Wenn dies innerhalb einer Minute mehr als dreimal bei verschiedenen Objekthypothesen stattfindet, wobei die Geschwindigkeit der Objekthypothesen beispielsweise einen minimalen Schwellenwert überschreiten, um keine Verwechslung mit einem Stau zuzulassen, können Parameter des Algorithmus adaptiert werden. Der einfache Fall, dass über die gesamte ROI im Bewegungsbild 'Aktivität' detektiert wird, kann ebenfalls erkannt werden. Als Reaktion werden beispielsweise $\theta$ (siehe oben Gleichung zu $q_p$) (bzw. $\rho$ (siehe oben Gleichung zu $f_m$)) erhöht, bis in der jeweils nächsten Minute das Verhältnis der Anzahl der Hypothesen in den ROIs, die keinem Prototypen zugeordnet werden können, unter einen Schwellenwert absinkt.

Bei detaillierterer Analyse kann das Ausfransen der Umrandungen während der Fahrzeughypothesengenerierung detektiert werden, weil es im Allgemeinen hochfrequenten Fourieranteilen in den Umrandungsfunktionen (x-y-Wertepaare für Vorder- und Hinterkante) entspricht, die sonst nicht bzw. weit weniger vorkommen. Wenn diese einen Schwellenwert überschreiten, können ebenfalls die beschriebenen Parameter entsprechend variiert werden.

Starker Nebel macht sich im Allgemeinen durch den umgekehrten Effekt bemerkbar: Die aktiven Bereiche schrumpfen. Hier ist ein Ausfransen der Fahrzeughypothesenbereiche nach innen üblich. Nebel kann z.B. extra detektiert werden durch eine globale Berechnung des Kontrastes im Bild, der bei Nebel abnimmt. Bei Nebel (tagsüber) wird vorzugsweise eine adaptive Verkleinerung der beschriebenen Parameter, entsprechend der Verringerung des globalen Bildkontrastes, vorgenommen.

Eine zusätzliche Berechnung einer Erosion und Dilatation auf den Bewegungsbildern ist insbesondere bei schlechtem Wetter einsetzbar: Hiermit können im Vorfeld Regentropfen, Schneeflocken sowie Rauscheffekte bei Nebel unterdrückt werden.

Eine weitere Möglichkeit ist, extern die Informationen über das Wetter (Regen, Nebel, Schnee) zu generieren, z.B. in Wetterstationen nahe bei den Kamerapositionen, und diese an die Kameras zu übermitteln und die Parameter der Algorithmen dementsprechend zu adaptieren.

Als einfache Lösungsansätze gegen das Problem von Regentropfen auf der Kameralinse sind beispielsweise eine oder mehrere der folgenden Maßnahmen durchführbar: Ein Blickwinkel der Kamera nahe der Senkrechten ist von Vorteil, da Regen bei Kameras, die nach unten zeigen, wesentlich seltener auf die Linse trifft, als bei flachen Blickwinkeln. Regentropfen auf der Linse und daraus resultierende Probleme können durch etwa vierteljähriges Besprühen mit einem entsprechenden Mittel, das die Tropfenbildung hemmt, oder durch neuartige Glasoberflächen mit mikrostrukturierten Oberflächen gemäß dem Lotuspflanzeneffekt, optional durch eine Linse mit einer derartigen Oberfläche oder durch eine entsprechende vorgeschaltete Scheibe aus transparentem Material deutlich verringert werden.

Bei Platzregen oder nach viel Regen können teilweise deutlich sichtbare Wasserfontänen auftreten. Im einfacheren Falle bleiben sie innerhalb $\tau$-Zeitdifferenzen etwa unverändert, im ungünstigen Falle, bei einer Pfütze, können die Fontänen sehr unterschiedlich groß sein. Für Letzteres können, sofern ein System mit extrem hoher Erfolgsrate benötigt wird, Extra-Algorithmen eingesetzt werden. Charakteristisch für Fontänen hinter Fahrzeugen sind etwa zerfranste Ränder. Genauer gesagt ist der Abstand der Längsbreiten des Objektes hinter dem Fahrzeug lokal stark variierend, d.h. die Fourieranalyse des Randes zeigt dort große Beiträge bei hohen Frequenzen. Damit können diese detektiert werden und dann anhand des Farbbildes herausgerechnet werden, insbesondere, wenn das Fahrzeug getrackt wird und sie zu einem anderen Zeitpunkt nicht mehr vorhanden sind.

## Analyse von IR-Kameradaten

Werden beispielsweise nachts anstelle von VIS-Bildern IR-Kameradaten für eine Fahrzeugerkennung eingesetzt, so wird vorzugsweise berücksichtigt, dass IR-Daten im Vergleich zu VIS-Bildern eine niedrigere Auflösung aufweisen.

Speziell im bewegungsbasierten Verfahren, nicht bei den anderen Verfahren wie z.B. dem beschriebenen Eckendetektionsbasierten Verfahren, ist folgendes zu beachten. Es gibt bei der erstmaligen Detektion eines Fahrzeuges eine minimale Fahrzeuggeschwindigkeit $v_{grenz}$, oberhalb welcher Fahrzeuge detektiert werden können. Diese ist proportional zum Abstand zweier Punkte, die aufgelöst werden (siehe oben die Formel zur Berechnung von $v_{grenz}(\alpha)$ ). Dieser Abstand zweier Punkte ist aus dem Verhältnis der Pixel pro Meter bei der VIS und bei der IR-Kamera bekannt. Die Geschwindigkeit $v_{grenz}$ ist somit aufgrund der niedrigeren Auflösung bei IR höher.

Des Weiteren kann bei IR-Bildern Wärme des Fahrzeugs, d.h. ein Bereich um das bewegte Fahrzeug, insbesondere in der Nähe der Bodenfläche des Fahrzeugs, als Bewegungsbereich detektiert werden. Dies hat als Folge, dass das Matchen mit den Prototypen über einen größeren Ortsvariationsbereich durchgeführt werden muss, was den Rechenzeitbedarf erhöht.

IR-Daten werden daher vorzugsweise mit dem alternativen Eckendetektionsverfahren bzw. Kantendetektionsverfahren verarbeitet. Eine Eckendetektion ist durchführbar, solange die Kanten, die zur Ecke führen, lang genug sind. Die Kantenlänge in der zu analysierenden Projektion sollte hierfür mindestens das zweifache der Auflösung betragen, damit die entsprechende Ecke verwendet werden kann. Wenn beispielsweise von der IR-Kamera nur Z=0,2m aufgelöst werden, sollten die zuführenden Kanten in der zu analysierenden Projektion möglichst 2Z =0,4m lang sein.

Vorzugsweise wird die Hierarchie von der Reihe nach zu suchenden Ecken für IR-Bilder anders gewählt als für VIS-Bilder. Bei IR-Bildern ist z.T. das Innere von Fahrzeugen weniger kontrastreich, somit kann den äußeren Ecken eine höhere Priorität zugeordnet werden.

Alternativ können für IR-Daten auch der genannte alternative CSC-Ansatz und verwandte Ansätze verwendet werden.

Falls beispielsweise im IR-Bild Fahrzeug-Lichter und/oder Personenköpfe aufgelöst werden, können diese wie im Hauptansatz für VIS-Daten detektiert werden.

Daneben ist es auch denkbar, IR-Bilder und VIS-Bilder zu verknüpfen. Falls ein VIS-IR verknüpftes Bild vorliegt, kann z.B. eine Fahrzeug-Lichterdetektion, wie im Hauptalgorithmus beschrieben, durchgeführt werden, und als Startpunkt und zur Untermauerung der Fahrzeug-Hypothese verwendet werden.

Bzgl. Fahrzeug-Wiedererkennung fällt im Dunkeln die Farbe als Merkmal aus. Es bleiben grobe Daten über Fahrzeug-Prototyp und gegebenenfalls Abmessungen, ferner Informationen über Objektreihenfolgen, die zu einer eingeschränkten Wiedererkennung verwendet werden können.

## Daten für eine Ampelsteuerung

Mit den erfindungsgemäßen Verfahren sind Ortsvektoren und/oder Geschwindigkeiten von Fahrzeugen, Fahrzeugclustern und/oder anderen Verkehrsobjekten mit dem Takt T ermittelbar. Aus diesen Daten lassen sich mittels Interpolation der Ortsvektoren gemäß den Geschwindigkeitsvektoren Daten für beliebige Zeitpunkte zwischen t-T und t berechnen, und mittels Extrapolation Daten, die ein wenig in der Zukunft von t liegen. Somit können für Ampelsteuerungen mit einem vorgebbaren Zeittakt aktuelle Daten erzeugt werden. Dieser Zeittakt kann insbesondere auch kleiner als T sein, z.B. 0,25 s.

Die Extrapolation der Daten kann on-board oder auch durch eine von dem Kamerarechnersystem getrennte Recheneinheit durchgeführt werden.

Für den Fall, dass besonders aktuelle Daten gewünscht sind und Daten auch bei sehr ungünstigen Witterungsbedingungen generiert werden sollen, können die Daten eines niedrigen Levels of Service (z.B. die geschätzte Anzahl Fahrzeuge pro Fahrspur) vom Kamerarechnersystem als erstes erzeugt werden und dann direkt und/oder mit Extrapolation gemäß dem gewünschten Zeittakt übertragen werden.

## Patentansprüche

**1.** Verfahren zur Erkennung und Wiedererkennung von Objekten, insbesondere von Kraftfahrzeugen im Straßenverkehr, mittels mindestens einem Kamerarechnersystem, welches mindestens mit einer Kamera und einer Bildverarbeitungs- und Auswerteeinheit ausgebildet ist,
umfassend folgende Verfahrensschritte:

a) Definieren mindestens einer Region of Interest (ROI), in der ein Objekt anzutreffen ist, wobei die Region of Interest wesentlich kleiner als der Bildbereich ist,
b) Aufnehmen von realen Bildern eines zu überwachenden Bereiches mit einem Zeittakt $\tau$, wobei der Bildbereich der Kamera nahezu unverändert bleibt,
c) Modifizieren der realen Bilder durch arithmetische Verknüpfungen und/oder Filterfunktionen,
d) Bestimmen von Fahrzeughypothesenbereichen in den modifizierten Bildern,
e) Detektieren von Fahrzeugen in den Fahrzeughypothesenbereichen,
f) Klassifizieren der detektieren Fahrzeuge anhand von Fahrzeugprototypen,
g) Ermitteln mindestens eines weiteren Objekt-Attributs und
h) Übermitteln des klassifizierten Objektes und der Objekt-Attribute an eine Zentrale und/oder eine benachbarte Kamera, deren Regions of Interest mit der erkennenden Kamera nicht überlappend sind und wiederholen der Verfahrensschritte a) - g) bei der benachbarten Kamera, wobei die Wiedererkennung in der Zentrale oder dem Rechner der benachbarten Kamera stattfindet.

**2.** Verfahren nach Anspruch 1, **dadurch gekennzeichnet, dass** aus aufeinanderfolgenden realen Bildern Differenzbilder erzeugt werden, wobei für die aktiven Bereiche in einer Region of Interest die Fahrzeughypothesenbereiche ermittelt werden.

**3.** Verfahren nach Anspruch 2, **dadurch gekennzeichnet, dass** zwei Bewegungsbilder aus den realen Bildern zu den Zeitpunkten t und t-$\tau$ gebildet werden, wobei das erste Bewegungsbild

$$q_p = H\left(\left|r_p - r_p(t-\tau)\right| + \left|g_p - g_p(t-\tau)\right| + \left|b_p - b_p(t-\tau)\right| - \theta\right)$$

für jeden durch eine Absolutgröße definierten Rasterpunkt p berechnet wird, mit einem Korrekturglied $\theta$, für das zweite Bewegungsbild die Region of Interest in einem definierten gröberen Raster in aneinandergrenzende Bereiche m unterteilt, für jeden Bereich m einer jeden Region of Interest eine Funktion $f_m$ berechnet wird

$$f_m = \sum_{\substack{q_p-Werte \\ im\ Bereich\ m}} q_p$$

und hieraus eine Funktion

$$g_m = H\left(f_m - \left[(\text{Anzahl der } q_p\text{- Werte im Bereich m}) \cdot \rho\right]\right) \text{ mit } 0 < \rho < 1$$

gebildet wird.

**4.** Verfahren nach Anspruch 3, **dadurch gekennzeichnet, dass** aus dem zweiten Bewegungsbild $g_m$ durch Clustern, Plausibilitätschecks der Ergebnisse und gegebenenfalls weiteren Clusterungen Bereiche mit $g_m > 0$ zusammengefasst werden und eine grobe Größenabschätzung der detektierten bewegten Objekte erfolgt.

**5.** Verfahren nach Anspruch 4, **dadurch gekennzeichnet, dass** mittels der Fahrzeughypothese gemäß Verfahrensanspruch 4) und dem ersten Bewegungsbild gemäß Verfahrensanspruch 3) eine Fahrzeugumrandung ermittelt wird.

**6.** Verfahren nach Anspruch 1 oder 2, **dadurch gekennzeichnet, dass** zur Bestimmung von Fahrzeughypothesenbereichen eine auf Fahrzeuge abgestimmte Scale-Space-Synchronisation und/oder eine Eckendetektion verwendet wird.

7. Verfahren nach Anspruch 6, **dadurch gekennzeichnet, dass** ein Bewegungsbild gebildet wird, in dem aktive Bewegungskanten bestimmt werden, wobei entsprechend geformte Polygone unter Einschluss der aktiven Bewegungskanten die unterste Ebene des Scale-Space bilden, deren lokale Maxima bestimmt werden, wobei die nächsthöhere Ebene des Scale-Space eine PKW-Ebene darstellt, wo die rezeptiven Felder Fahrzeugvorder- und Fahrzeughinterkantenhypothesen für PKWs zusammenfassen.

8. Verfahren nach Anspruch 7, **dadurch gekennzeichnet, dass** matchende Felder unter Verwendung einer ein- oder mehrdimensionalen, räumlich beschränkten, quadratischen Interpolation zur Optimierung des Feldes bestimmt werden.

9. Verfahren nach einem der vorangegangenen Ansprüche, **dadurch gekennzeichnet, dass** die Geschwindigkeit der Fahrzeughypothese ermittelt wird.

10. Verfahren nach Anspruch 9, **dadurch gekennzeichnet, dass** aus den realen Bildern zum Zeitpunkt t, t-$\tau$ und t-2$\tau$ Bewegungsbilder ermittelt werden, die miteinander verglichen werden.

11. Verfahren nach Anspruch 9 oder 10, **dadurch gekennzeichnet, dass** zum Verfolgen von detektierten Objekten eine Extrapolation eines geeigneten Ecken- oder Kantenbildes des detektierten Objekts verwendet wird.

12. Verfahren nach einem der vorangegangenen Ansprüche, **dadurch gekennzeichnet, dass** die Größe der einzelnen Regions of Interest in Abhängigkeit des Zeittaktes $\tau$ der realen Bildaufnahmen, eines Verarbeitungszeittaktes T, der auf der betreffenden Straße geltenden Geschwindigkeitsbegrenzung, und einer minimalen Länge zu erkennender Objekte derart gewählt wird, dass ein Objekt nicht innerhalb des Zeittaktes T die Region of Interest durchqueren kann.

13. Verfahren nach einem der vorangegangenen Ansprüche, **dadurch gekennzeichnet, dass** die Regions of Interest als geschlossene Polygonzüge mit mindestens vier Punkten ausgebildet sind.

14. Verfahren nach Anspruch 13, **dadurch gekennzeichnet, dass** ortsfeste, die Region of Interest teilweise verdekkende Objekte durch den Polygonzug ausgespart werden.

15. Verfahren nach einem der vorangegangenen Ansprüche, **dadurch gekennzeichnet, dass** die Regions of Interest im Ausfahrtsbereich einer Kreuzung angeordnet sind.

16. Verfahren nach einem der Ansprüche 1 bis 15, **dadurch gekennzeichnet, dass** die Regions of Interest im Einfahrtsbereich der Kreuzung angeordnet sind und die detektierten Objekte bis zur Ausfahrt weiterverfolgt werden.

17. Verfahren nach einem der vorangegangenen Ansprüche, **dadurch gekennzeichnet, dass** Farbdaten des Objektes als Objekt-Attribut erfasst werden.

18. Verfahren nach Anspruch 17, **dadurch gekennzeichnet, dass** die Farbdaten bei Fahrzeugen im Wesentlichen aus renormierten Farben der unteren Hälfte der Seitenflächen des Objektes bestimmt werden, wobei die Ränder des Objektes weitgehend unberücksichtigt bleiben.

19. Verfahren nach einem der vorangegangenen Ansprüche, **dadurch gekennzeichnet, dass** die Heckform, die Dachausbildung und/oder eine Objektabfolge als Objekt-Attribut erfasst werden.

20. Verfahren nach einem der vorangegangenen Ansprüche, **dadurch gekennzeichnet, dass** eine Schatten- und/oder Beleuchtungsanalyse durchgeführt wird.

21. Verfahren nach einem der vorangegangenen Ansprüche, **dadurch gekennzeichnet, dass** die Auswerteeinheit Daten über die Witterungsverhältnisse ermittelt und die Parameter bzw. zu verwendenden Algorithmen automatisch den erfassten Witterungsbedingungen anpasst.

22. Verfahren nach einem der vorangegangenen Ansprüche, **dadurch gekennzeichnet, dass** die Auswerteeinheit mindestens einen Parameter des Verfahrens selbsttätig anpasst.

**23.** Verfahren nach Anspruch 22, **dadurch gekennzeichnet, dass** die Größe von Regions of Interest in Abhängigkeit der Helligkeit gewählt wird.

**24.** Verfahren nach einem der vorangegangenen Ansprüche, **dadurch gekennzeichnet, dass** ein Wackeln der Kamera detektiert wird und das Wackeln anhand mindestens eines gespeicherten Referenzbildes herausgerechnet wird.

**25.** Verfahren nach einem der vorangegangenen Ansprüche, **dadurch gekennzeichnet, dass** eine Hierarchie von Regions of Interest (ROI) verschiedener festgelegter Größe bestimmt wird.

**26.** Vorrichtung zur Durchführung des Verfahrens nach Anspruch 1, **dadurch gekennzeichnet, dass** die Vorrichtung mindestens eine Kamera und eine Bildverarbeitungseinheit umfasst, wobei mittels einer Kamera periodisch ein fester Bildbereich aufnehmbar ist, in dem Bildbereich mindestens eine Region of Interest definiert ist, die wesentlich kleiner als der Bildbereich ist, in der Bildverarbeitungseinheit modifizierte Bilder der real aufgenommenen Bilder durch arithmetische Verknüpfungen und/oder Filterfunktionen erzeugbar sind, aus den modifizierten Bildern Fahrzeughypothesenbereiche bestimmbar sind, aus denen Verkehrsobjekte detektierbar sind, die detektierten Verkehrsobjekte anhand von Prototypen klassifizierbar sind und mindestens ein weiteres Objekt-Attribut ermittelbar ist, wobei die Daten eines klassifizierten Objektes und der Objekt-Attribute an eine Zentrale und/oder benachbarte Kamera übertragbar sind.

**27.** Vorrichtung nach Anspruch 26, **dadurch gekennzeichnet, dass** die Kamera in einem Gehäuse aufnehmbar ist, welches mit einem spitz zulaufenden Dach ausgebildet ist.

Bildfolge
Bewegungsbilder
Skala 0.1m/0.3m
Schatten- /
Beleuchtungs-
analyse
FZ- Hypothesen
ermitteln
FZ
Detektion
FZ
Klassifikation
FZ Attribut-
extraktion
FZ Speicher
FZ Daten von
Nachbarkameras
FZ
Verfolgung
FZ Wiedererkennung

Fig. 1

1
2
3

Fig. 2